# EUROPÄISCHE PATENTSCHRIFT

(11) **EP 3 008 414 B1**
(45) Veröffentlichungstag und Bekanntmachung des Hinweises auf die Patenterteilung: **05.08.2020**
(21) Anmeldenummer: 14727839.4
(22) Anmeldetag: 04.06.2014
(51) Int. Cl.: F25D 29/00

(54) **KÄLTEGERÄT MIT EINEM KAMERAMODUL**
REFRIGERATION APPLIANCE COMPRISING A CAMERA MODULE
APPAREIL FRIGORIFIQUE ÉQUIPÉ D'UN MODULE À CAMÉRA

(30) Priorität: 14.06.2013 DE 102013211097
(43) Veröffentlichungstag der Anmeldung: 20.04.2016
(73) Patentinhaber: BSH Hausgeräte GmbH, 81739 München (DE)
(72) Erfinder: KLINGSHIRN, Astrid, 86441 Zusmarshausen (DE)
(86) Internationale Anmeldenummer: PCT/EP2014/061616
(87) Internationale Veröffentlichungsnummer: WO 2014/198612

(56) Entgegenhaltungen:
- JP-A- 2006 084 132
- US-A1- 2003 164 754
- US-A1- 2012 023 971
- US-A1- 2013 015 753

## Beschreibung

Die vorliegende Erfindung betrifft ein Kältegerät mit einem Kameramodul.

Die Offenlegungsschrift US 2012/023971 A1 zeigt ein Kältegerät mit einer Infrarotkamera.

Die Offenlegungsschrift US 2003/164754 A1 zeigt ein Kältegerät mit einer Kamera.

Die Offenlegungsschrift US 2013/015753 A1 zeigt ein Kältegerät mit einer Kameraeinheit. Die Offenlegungsschrift JP 2006 084132 A zeigt ein Kältegerät umfassend einen Sensor. Die Offenlegungsschrift SE-9900582-9 offenbart ein Kältegerät umfassend eine Kamera.

Es ist die der Erfindung zugrundeliegende Aufgabe, ein Kältegerät anzugeben, bei dem die Frische eines Kühlgutes bestimmt werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kältegerät gelöst, gemäß Anspruch 1, dass ein Kameramodul zum Erfassen von ersten Bilddaten eines Kühlgutes zu einem ersten Zeitpunkt und zweiten Bilddaten des Kühlgutes zu einem zweiten Zeitpunkt und eine Frischebestimmungseinrichtung zum Bestimmen eines Frischezustands des Kühlgutes auf Basis der ersten Bilddaten und der zweiten Bilddaten umfasst. Der Frischezustand kann auch ein Reifegrad sein. Dadurch wird beispielsweise der technische Vorteil erreicht, dass der Frischzustand von verderblicher Ware automatisch erfasst werden kann und ein Benutzer bei Überschreiten eines vorgegebenen Frischzustands informiert werden kann. Unter einem Kältegerät wird insbesondere ein Haushaltskältegerät verstanden, also ein Kältegerät, das zur Haushaltsführung in Haushalten oder im Gastronomiebereich eingesetzt wird, und insbesondere dazu dient Lebensmittel und/oder Getränke bei bestimmten Temperaturen zu lagern, wie beispielsweise ein Kühlschrank, ein Gefrierschrank, eine Kühlgefrierkombination, eine Gefriertruhe oder ein Weinkühlschrank.

In einer vorteilhaften Ausführungsform des Kältegerätes sind die ersten Bilddaten Dreifarb-Bilddaten und die Frischebestimmungseinrichtung ist ausgebildet, den Frischezustand oder Reifegrad des Kühlgutes auf Basis eines Abgleiches mit hinterlegten Bilddaten oder Standards zu bestimmen.

In einer weiteren vorteilhaften Ausführungsform des Kältegerätes sind die ersten Bilddaten und die zweiten Bilddaten Dreifarb-Bilddaten und die Frischebestimmungseinrichtung ist ausgebildet, den Frischezustand des Kühlgutes auf Basis eines Farbunterschieds zwischen den ersten Bilddaten und den zweiten Bilddaten zu bestimmen. Dadurch wird beispielsweise der technische Vorteil erreicht, dass der Frischzustand auf eine besonders zuverlässige Weise bestimmt werden kann.

Die Frischebestimmungseinrichtung ist ausgebildet, die Art des Kühlgutes auf Basis der ersten Bilddaten oder der zweiten Bilddaten zu erfassen. Dadurch wird beispielsweise der technische Vorteil erreicht, dass zusätzlich zu einer Änderung in den Bilddaten die Art des Kühlgutes bei der Bestimmung eines Frischezustandes berücksichtigt wird.

In einer weiteren vorteilhaften Ausführungsform des Kältegerätes umfasst das Kältegerät eine Eingabevorrichtung zum manuellen Eingeben der Art des Kühlgutes. Dadurch wird beispielsweise der technische Vorteil erreicht, dass ein Benutzer die Art des Kühlgutes manuell wählen kann, wenn eine automatische Bestimmung der Art des Kühlgutes fehlschlägt.

In einer weiteren vorteilhaften Ausführungsform des Kältegerätes ist die Frischebestimmungseinrichtung ausgebildet, den Frischezustand des Kühlgutes auf Basis der Art des Kühlgutes zu bestimmen. Dadurch wird beispielsweise ebenfalls der technische Vorteil erreicht, dass sich die Genauigkeit des bestimmten Frischezustands erhöht.

Die Frischebestimmungseinrichtung umfasst eine Prozessoreinrichtung zum Verarbeiten der ersten und des zweiten Bilddaten. Dadurch wird beispielsweise der technische Vorteil erreicht, dass unterschiedliche Analysealgorithmen auf Basis der ersten Bilddaten oder der zweiten Bilddaten angewendet werden können.

In einer weiteren vorteilhaften Ausführungsform des Kältegerätes umfasst das Kameramodul ein Lichtsensorfeld zum Erfassen der ersten oder zweiten Bilddaten. Dadurch wird beispielsweise der technische Vorteil erreicht, dass die Bilddaten auf einfache Weise erhalten werden.

In einer weiteren vorteilhaften Ausführungsform des Kältegerätes ist das Kameramodul ausgebildet, die ersten und die zweiten Bilddaten sowohl im sichtbaren Spektralbereich als auch im Infrarot-Spektralbereich zu bestimmen. Dadurch wird beispielsweise der technische Vorteil erreicht, dass die Bestimmung des Frischezustands nicht nur im optischen als auch im infraroten Bereich durchgeführt werden kann und sich die Genauigkeit des Frischezustands verbessert.

In einer weiteren vorteilhaften Ausführungsform des Kältegerätes umfasst das Kameramodul ein dichroitisches Element zum gleichzeitigen Erfassen der Bilddaten im sichtbaren Spektralbereich und im Infrarot-Spektralbereich. Dadurch wird beispielsweise der technische Vorteil erreicht, dass das die Infrarotstrahlung von der sichtbaren Strahlung getrennt werden kann und separat erfasst werden kann.

In einer weiteren vorteilhaften Ausführungsform des Kältegerätes umfasst das Kältegerät eine Beleuchtungseinrichtung zum Beleuchten des Kältefachs während des Erfassens der ersten und/oder zweiten Bilddaten. Die Beleuchtungseinrichtung kann beispielsweise eine Lichtquelle für sichtbares Licht oder eine Infrarot-Lichtquelle sein. Dadurch wird beispielsweise der technische Vorteil erreicht, dass der Frischezustand unter vorbestimmten Beleuchtungsbedingungen durchgeführt werden kann.

In einer weiteren vorteilhaften Ausführungsform des Kältegerätes ist die Beleuchtungseinrichtung ausgebildet, monochromatisches Licht einer vorgegebenen Frequenz auszusenden. Dadurch wird beispielsweise der technische Vorteil erreicht, dass ein Auswerten der Bilddaten bei einer vorbestimmten Frequenz durchgeführt werden kann.

In einer weiteren vorteilhaften Ausführungsform des Kältegerätes umfasst die Beleuchtungseinrichtung eine frequenzmäßig durchstimmbare Lichtquelle zum Aussenden des monochromatischen Lichtes, beispielsweise eine durchstimmbare Leuchtdiode. Dadurch wird beispielsweise der technische Vorteil erreicht, dass eine Spektralanalyse des Kühlgutes gewonnen werden kann.

In einer weiteren vorteilhaften Ausführungsform des Kältegerätes ist die Beleuchtungseinrichtung ausgebildet, polychromatisches Licht auszusenden. Dadurch wird beispielsweise der technische Vorteil erreicht, dass die Bilddaten in einem großen Spektralbereich gleichzeitig gewonnen werden können.

In einer weiteren vorteilhaften Ausführungsform des Kältegerätes umfasst das Kältegerät ein Anzeigegerät zum Anzeigen des Frischzustandes des Kühlgutes. Dadurch wird beispielsweise der technische Vorteil erreicht, dass der Benutzer den Frischezustand des Kühlgutes erkennen kann.

In einer weiteren vorteilhaften Ausführungsform des Kältegerätes umfasst das Kältegerät einen Sensor zum Erfassen einer Öffnung einer Tür des Kältegerätes und das Kältegerät ist ausgebildet, eine Erfassung der ersten oder zweiten Bilddaten bei geöffneter Tür zu verhindern. Dadurch wird beispielsweise der technische Vorteil erreicht, dass gleichbleibende Lichtverhältnisse bei der Erfassung der Bilddaten sichergestellt werden können.

Ausführungsbeispiele der Erfindung sind in den Zeichnungen dargestellt und werden im Folgenden näher beschrieben.

Es zeigen:
- Fig. 1: eine schematische Ansicht eines Kältegerätes;
- Fig. 2A: eine perspektivische Ansicht eines Kältefachs mit zwei Kameramodulen;
- Fig. 2B: eine Vorderansicht des Kältefachs;
- Fig. 3A: eine perspektivische Ansicht eines Kältefachs mit einem Kameramodul;
- Fig. 3B: eine Aufsicht des Kältefachs;
- Fig. 4: eine perspektivische Ansicht eines Kältefachs mit mehreren Kameramodulen;
- Fig. 5: zwei Ansichten von unterschiedlichen Kameramodule;
- Fig. 6: eine Aufsicht und eine Seitenansicht des Kältefachs in Verbindung mit einem Bildöffnungswinkel;
- Fig. 7: eine Aufsicht auf das Kältefach bei Verwendung vom mehreren Kameramodulen;
- Fig. 8: eine perspektivische Ansicht eines Kältefaches mit einer Sensormatte;
- Fig. 9: eine Ansicht eines Kältegerätes mit einem Datenbus;
- Fig. 10: eine weitere Ansicht eines Kältegerätes mit einem Datenbus;
- Fig. 10A: eine schematische Ansicht einer Anordnung der Kameramodule in einer Tür;
- Fig. 11: eine schematische Ansicht eines Datenbusses mit Verteilerknoten;
- Fig. 12: eine Ansicht einer Prozessoreinrichtung;
- Fig. 13: Bilder von Kühlgut im Kältefach und eine Bildanalyse;
- Fig. 14: eine Ansicht eines Kameramodulbediengerät mit einer berührungsempfindliche Anzeige;
- Fig. 15: eine schematische Ansicht eines Kältegerätes mit einem Kamerafeld in einer Tür; und
- Fig.16A-C: schematische Ansichten unterschiedlicher Anbindungen von Kameramodulen.

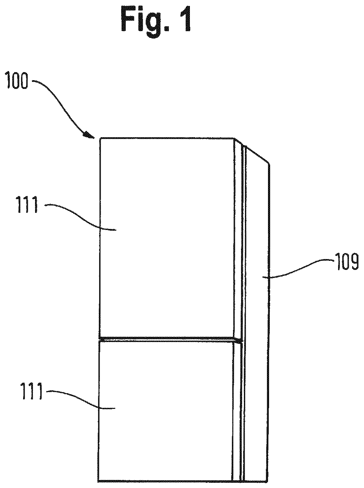

Fig. 1 zeigt einen Kühlschrank stellvertretend für ein Kältegerät 100 mit einer oberen und unteren Kühlschranktür 111. Bei dem Kältegerät 100 handelt es sich um ein alleinstehendes Gerät (Stand-Alone-Gerät).

Der Kühlschrank dient beispielsweise zur Kühlung von Lebensmitteln und umfasst einen Kältemittelkreislauf mit einem Verdampfer, einem Verdichter, einem Verflüssiger und einem Drosselorgan. Der Verdampfer ist ein Wärmeaustauscher, in dem nach der Expansion das flüssige Kältemittel durch Wärmeaufnahme von dem zu kühlenden Medium, d.h. der Luft im Inneren des Kühlschranks, verdampft wird.

Der Verdichter ist ein mechanisch betriebenes Bauteil, das Kältemitteldampf vom Verdampfer absaugt und bei einem höheren Druck zum Verflüssiger ausstößt. Der Verflüssiger ist ein Wärmeaustauscher, in dem nach der Kompression das verdampfte Kältemittel durch Wärmeabgabe an ein äußeres Kühlmedium, d.h. die Umgebungsluft, verflüssigt wird. Das Drosselorgan ist eine Vorrichtung zur ständigen Verminderung des Druckes durch Querschnittsverengung.

Das Kältemittel ist ein Fluid, das für die Wärmeübertragung in dem kälteerzeugenden System verwendet wird, das bei niedrigen Temperaturen und niedrigem Druck des Fluids Wärme aufnimmt und bei höherer Temperatur und höherem Druck des Fluids Wärme abgibt, wobei üblicherweise Zustandsänderungen des Fluids inbegriffen sind.

Das Kältegerät 100 umfasst die obere und untere Tür 111, die ein Kältefach im Inneren des Kältegerätes 100 verschließt. Daneben umfasst das Kältegerät 100 eine Seitenwand 109. Im Inneren des Kältegerätes 100 befindet sich ein elektronisches Kameramodul, das in der Lage ist, das Kühlgut im Inneren des Kältegerätes 100 mittels eines Einzelbildes aufzunehmen und Bilddaten zu erzeugen. Das Kameramodul 101 kann beispielsweise vom Kunden richtbare, schwenkbare oder einstellbare sein.

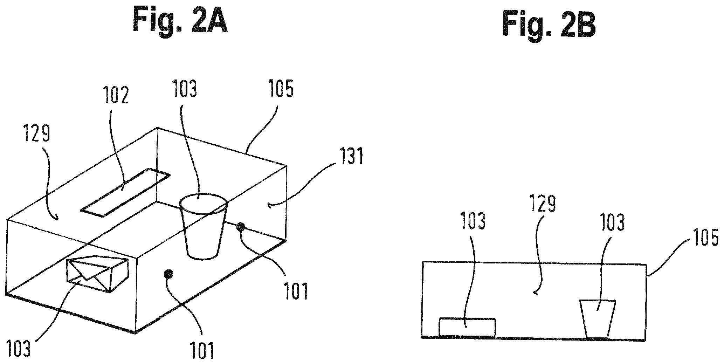

Fig. 2A zeigt eine perspektivische Ansicht des Kältefachs 105 mit zwei Kameramodulen 101. Das Kältefach 105 bildet einen Aufnahmeraum für das Kühlgut 103 im Inneren des Kältegerätes 100. Im Inneren des Kältefachs 105 befinden sich als Kühlgut 103 beispielsweise ein Becher und eine Lebensmitteltüte. Die beiden Kameramodule 101 sind an einer Vorderseite 131 des Kältefachs 105 auf gleicher Höhe und in einem horizontalen Abstand zueinander angeordnet, beispielsweise in der Tür 111 des Kältegerätes 100. Das Kühlgut 103 wird von den beiden Kameramodulen 101 von der Vorderseite des Kältegerätes 100 her aufgenommen. Die Kameramodule 101 an der Vorderseite 131 des Kältefachs 105 ermöglichen die Emulation der Sicht eines Benutzers auf den Inhalt des Kältefaches 105.

Zum Beleuchten des Kältefaches 105 während einer Aufnahme ist eine Beleuchtungseinrichtung 102 vorgesehen. Die Beleuchtungseinrichtung 102 ist beispielsweise eine Intrarotbeleuchtung oder eine Beleuchtung mit sichtbarem Licht. Die Beleuchtungseinrichtung 102 ist beispielsweise in einer Fachdecke des Kältefachs 105 angeordnet. Ein und das gleiche Bild kann mit unterschiedlicher Beleuchtung für zusätzliche Bildinformation oder eine höhere Auflösung aufgenommen werden.

Die Gestaltung des Innenraums des Kältefachs 105 kann bezüglich des Kameramoduls 105 optimiert sein, beispielsweise hinsichtlich einer Verstellbarkeit, einer Fachbodenanordnung, der Anordnung der Türabsteller zu den Fachböden oder einer Verstellbarkeit der Türabsteller. Die Kameramodule 101 sind beispielsweise zur Mitte des Kältegerätes hin geneigt. Die Kameramodule 101 können beweglich sein. Ein Kameramodul 101 in einer Seitenwand weist den Vorteil auf, dass ein Blick auf die Tür 111 gewonnen wird. Zudem können reflektierende Beschichtungen, Glasperlen, Mini-Retroreflektoren verwendet werden.

Frische-Fach hat keine eigene Kamera, transparenter Deckel, transparenter Fachboden, keine opake Leiste an der Fachbodenkante

Die Kameramodule 101 umfassen ein Lichtsensorfeld mit Farbsensoren, wie beispielsweise einen CCD-Chip. Das Lichtsensorfeld weist beispielsweise eine Auflösung von zumindest 640 X 480 Bildpunkten (VGA) und drei Farbkanäle mit einer Farbtiefe von zumindest 8 Bit je Farbkanal auf, beispielsweise RGB-Farbkanäle. Das Kameramodul 101 kann beispielsweise derart ausgestaltet sein, dass dieses nicht nur Bilddaten im sichtbaren Bereich aufnimmt, sondern zusätzlich auch Bilddaten im Infrarotbereich erfasst.

Verwendbare CCD-Bildsensoren für das Lichtsensorfeld bestehen aus einem Feld (Array) lichtempfindlicher Fotodioden. Diese können rechteckig, quadratisch oder polygonal sein, mit Kantenlängen von 1,4 µm bis über 20 µm. Je größer die Fläche der Fotodioden ist, desto höher sind die Lichtempfindlichkeit und der Dynamikumfang des CCD-Bildsensors. Bei gleicher Sensorgröße ist in diesem Fall die Bildauflösung jedoch kleiner. Die Kameramodule 101 weisen eine Schnittstelle zur Kommunikation mit einer Prozessoreinrichtung auf. Die gewonnenen Sensordaten des Lichtsensorfeldes können mit der Prozessoreinrichtung verarbeitet werden. Das System hat Strom nur bei Anforderung aktiv in der Größenordnung von 3 W und im Standby von 0,1 W.

Fig. 2B zeigt eine Frontalansicht des Kältefachs 105 aus der Perspektive eines der Kameramodule 101. In der Frontalansicht sind die Umrisse des Kühlgutes 103 vor dem Hintergrund einer Rückseite 129 des Kältefachs 105 zu erkennen.

Durch die Verwendung von zwei Kameramodulen 101, die in einem horizontalen Abstand zueinander angeordnet sind, lassen sich beispielsweise zwei Bilder des Kühlgutes 103 aufnehmen, die in einer stereoskopischen Ansicht einem Benutzer ein dreidimensionales Bild des Kühlgutes 103 vermitteln. Daneben entsteht bei der Verwendung von zwei Kameramodulen 101 der Vorteil, dass, selbst falls eines der Kameramodule 101 durch Kühlgut 103 verstellt sein sollte, der Innenraum des Kältefaches 105 durch das andere der Kameramodule 101 aufgenommen werden kann.

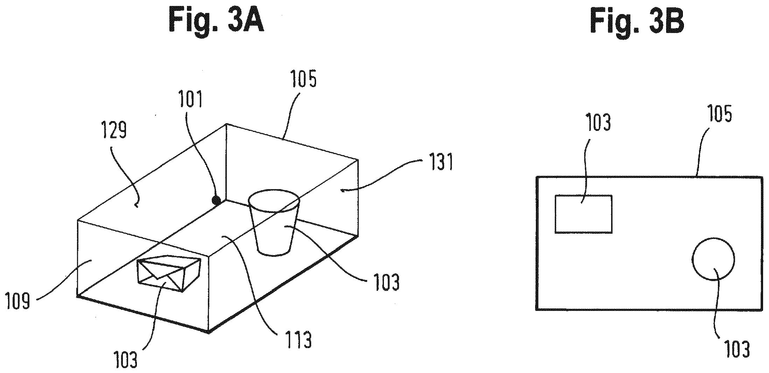

Fig. 3A zeigt eine weitere perspektivische Ansicht des Kältefachs 105 mit einem Kameramodul 101. Das Kameramodul 101 ist in der Fachdecke 113 des Kältefachs 105 angeordnet. Durch die Anordnung des Kameramoduls 101 in der Fachdecke 113 wird eine grundlegende Veränderung der Blickrichtung und eine Aufsicht auf den Inhalt des Kältefaches 105 ermöglicht.

Fig. 3B zeigt eine Aufsicht auf das Kältefach 105 aus der Perspektive des in der Fachdecke 113 angeordneten Kameramoduls 103. Diese Aufsicht kann für die Visualisierung des Inhaltes des Kältefaches 105 herangezogen werden.

Im Allgemeinen kann das Kameramodul auch an der Rückseite 129 oder einer Seitenwand 109 des Kältefaches 105 angeordnet sein. Hierdurch kann das Blickfeld für die Visualisierung des Inhaltes erweitert werden und unterschiedliche Perspektiven innerhalb des Kältefaches 105 oder eine Rundumsicht aufgenommen werden.

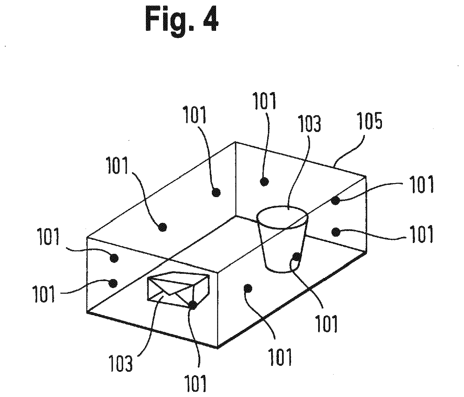

Fig. 4 zeigt eine perspektivische Ansicht eines Kältefachs 105 mit mehreren Kameramodulen 101. Die Kameramodule 101 sind derart angeordnet, dass das Kühlgut 103 von jeder Seite aus und unter unterschiedlichen Betrachtungswinkeln aufgenommen werden kann. Durch ein Zusammensetzen der von den einzelnen Kameramodulen 101 aufgenommenen Bilder lässt sich eine Rundumansicht des Kühlgutes 103 in dem Kältefach 105 erzeugen.

Damit das Kühlgut 103 mit einer ausreichenden Helligkeit durch das Kameramodul 101 aufgenommen werden kann, wird eine Beleuchtungseinrichtung 102 im Innenraum des Kältefaches 105 realisiert. Das Kameramodul 101 und die Beleuchtungseinrichtung 102 können beispielsweise in einem gemeinsamen Bauraum angeordnet sein.

Beispielsweise ist im Inneren des Kältegerätes 100 ein Blitzlichtgerät (Flash-Light) zum Aussenden eines Lichtblitzes während einer Aufnahme als Beleuchtungseinrichtung 102 angeordnet, so dass eine Aufnahme mittels Blitzlicht gewonnen wird. Das Blitzlichtgerät ist beispielsweise an dem Kameramodul 101 angeordnet. Das Blitzlichtgerät kann durch eine zusätzliche Steuerung aktiviert werden, die ein Steuersignal für jedes Kameramodul 101 ausgibt. Die Lichtintensität des Blitzes kann mit einem speziellen Blitzbelichtungsmesser oder einem Belichtungsmesser mit Doppelfunktion gemessen werden.

Daneben kann das Kältegerät 100 ein Leuchtdiodenfeld (LED-Array) als Beleuchtungseinrichtung 102 umfassen, das derart angeordnet ist, dass das Kühlgut 103 im Kältefach 105 möglichst gleichmäßig von allen Seiten beleuchtet wird. Das Leuchtdiodenfeld kann zentral gesteuert werden. Zudem kann durch das Leuchtdiodenfeld auf einfache und energiesparende Weise eine homogene oder adaptive Beleuchtung des Kältefachs 105 realisiert werden und ein Schattenwurf reduziert werden.

Im Allgemeinen können jedoch auch alle anderen geeigneten Beleuchtungseinrichtungen verwendet werden, wie beispielsweise LED-Streifen, Glühlampen oder Neonröhren. Bei geöffneter Kältegerätetür kann eine Raumbeleuchtung als Innenbeleuchtung verwendet werden.

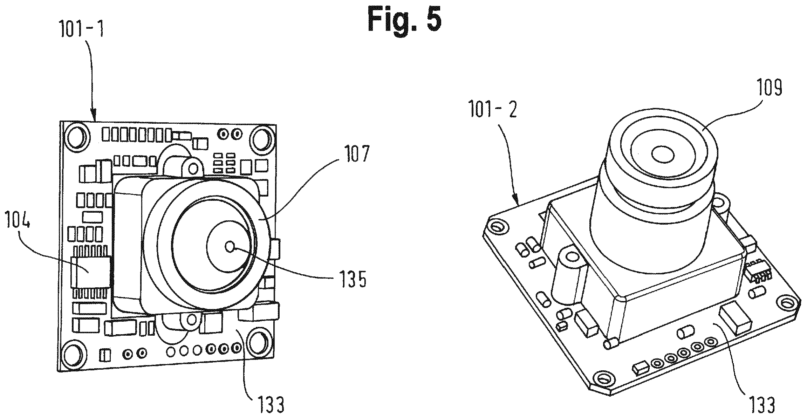

Fig. 5 zeigt zwei unterschiedliche Kameramodule 101-1 und 101-2. Für die Bilderfassung stehen zwei Typen von Kameramodulen 101-1 und 101-2 zur Verfügung, die zum Einbau in dem Kältegerät 100 geeignet sind. Die fertigen Kameramodule 101-1 und 101-2 umfassen beispielsweise ein Lichtsensorfeld, ein Objektiv und einen Mikrocontroller 104.

Kameramodule 101-1 und 101-2 mit integriertem Mikrocontroller 104 sind auf einfache Weise in das Kältegerät 100 zu integrieren. Existiert ein Treiber für das jeweilige Kameramodul 101-1 und 101-2 wird die Integration ebenfalls vereinfacht. Falls die Kameramodule 101-1 und 101-2 eine USB-Schnittstelle umfassen, können die Kameramodule 101-1 und 101-2 direkt an einen USB-Datenbus oder einen PC angeschlossen werden. Die Kameramodule 101-1 und 101-2 weisen einen Imager auf, der Bildrohdaten zur Auswertung bereitstellt.

Die Kameramodule 101-1 und 101-2 sind gegen Fruchtsäure, Staub und Feuchtigkeit geschützt. Die Kameramodule 101-1 und 101-2 können in einem gekapseltem Gehäuse angeordnet sein oder und mit einer Linsenheizung durch eine IR-LED und/oder Linsenbeschichtung versehen sein, um ein Beschlagen zu verhindern.

Das erste Kameramodul 101-1 umfasst eine Lochblende 135 (Pin Hole-Linse) und eine Platine 133, auf der ein Chip mit einem Lichtsensorfeld und ein Mikrocontroller 104 angeordnet sind. Das Kameramodul 101-1 wird durch eine Lochkamera 107 (Pin Hole-Kamera) gebildet, die eine Glasabdeckung gegen Verschmutzung umfassen kann. Obwohl die Lichtstärke der Lochkamera 107 kleiner als diejenige von fokussierenden Kameras ist, ist die Schärfentiefe der Lochkamera 107 größer. Die geringere Lichtstärke kann jedoch in einfacher Weise durch eine längere Belichtungszeit kompensiert werden, da im Inneren des Kältefachs 105 keine Bewegungen stattfinden.

Das zweite Kameramodul 101-2 umfasst ein Objektiv 109 und eine Platine 133, auf der ein Chip mit einem Lichtsensorfeld und ein Mikrocontroller angeordnet sind. Das Objektiv 109 kann beispielsweise eine Brennweite von weniger als 10 mm (Miniaturobjektiv) aufweisen, so dass auch das Objektiv 109 eine hohe Tiefenschärfe erzeugt und ein Nahbereich abgebildet werden kann. Das Objektiv 109 ist beispielsweise ein Weitwinkelobjektiv mit einem Bildöffnungswinkel von über 60°. Der Bildöffnungswinkel beschreibt den Winkelbereich, der von dem Kameramodul 101-2 erfasst werden kann. Zusätzlich können die Kameramodule 101-1 und 101-2 weitere Umlenkungseinrichtungen wie beispielsweise klappbare oder rotierende Prismen, Spiegel, Linsen oder Halbleiterspiegel umfassen.

Die Platine 133 weist beispielsweise Abmessungen von 32 mm x 32 mm auf. Auf der Platine 133 sind beispielsweise elektrische Schaltungen für den Mikrocontroller 104 und eine Schnittstelle zum Anschließen des Kameramoduls 101 an einen Datenbus gebildet, so dass Bilddaten als Datei bereitgestellt werden können. Die Platine 133 ist beispielsweise in der Tür 111 im Schaum gebildet.

Die Höhe des Kameramoduls 101-1 und 101-2 wird von dem Objektiv 109 oder der Lochblende 135 definiert und liegt beispielsweise zwischen 10 mm und 30 mm. Lochblenden 135 ermöglichen eine geringere Tiefe des Kameramoduls 101 von unter 20 mm. Zudem benötigt ein Kameramodul 101-1 mit einer Lochblende 135 eine kleinere Öffnung oder Aussparung zur Montage in einer Wand des Kältegerätes 100. Für ein Kameramodul 101-1 mit einer Lochblende 135 beträgt die Tiefe der Aussparung beispielsweise 2 mm bis 3 mm, wohingegen bei einem Kameramodul 101-2 mit einem Objektiv 109 die Tiefe der Aussparung ca. 10 mm beträgt. Das Kameramodul 101-1 mit der Lochblende 135 kann auch ohne Platine 133 realisiert sein und kann dann Abmessungen von beispielsweise 10 mm x 10 mm x 7 mm aufweisen. Eine Lochkamera 107 mit einer Lochblende 135 kann beispielsweise einen Bildöffnungswinkel von 120° zulassen.

Die Kameramodule 101-1 und 101-2 können unterschiedliche Schnittstellen zum Übertragen von Bilddaten aufweisen, wie beispielsweise eine RS232-Schnittstelle, eine SPI-Schnittstelle, eine IIC-Schnittstelle oder eine USB-Schnittstelle.

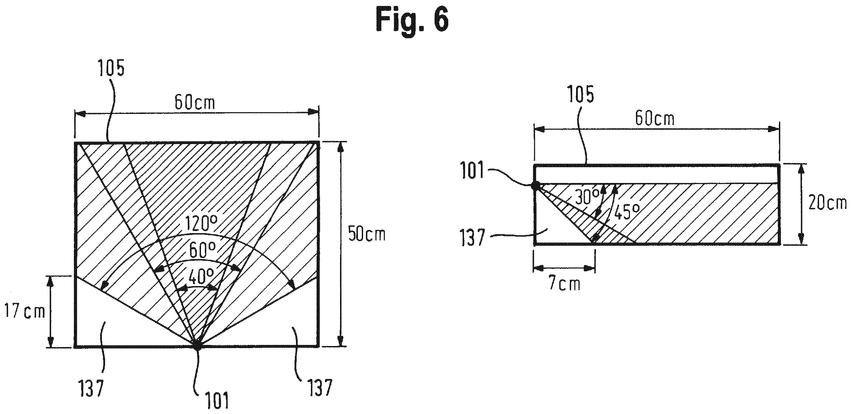

Fig. 6 zeigt eine Aufsicht und eine Seitenansicht des Kältefachs 105 in Verbindung mit unterschiedlichen Bildöffnungswinkeln für ein Kältefach 105 mit 20 cm x 60 cm x 50 cm. Der Bildöffnungswinkel beschreibt den Winkelbereich, der von dem Kameramodul 101 bildmäßig erfasst werden kann. Bei verschiedenen Bildöffnungswinkeln ergeben sich unterschiedliche Sichtbereiche des Kameramoduls 101. Seitlich von dem Kameramodul 101 befinden sich im Kältefach 105 einzelne Bereiche 137, die nicht einsehbar sind und die mit größer werdendem Bildöffnungswinkel kleiner werden.

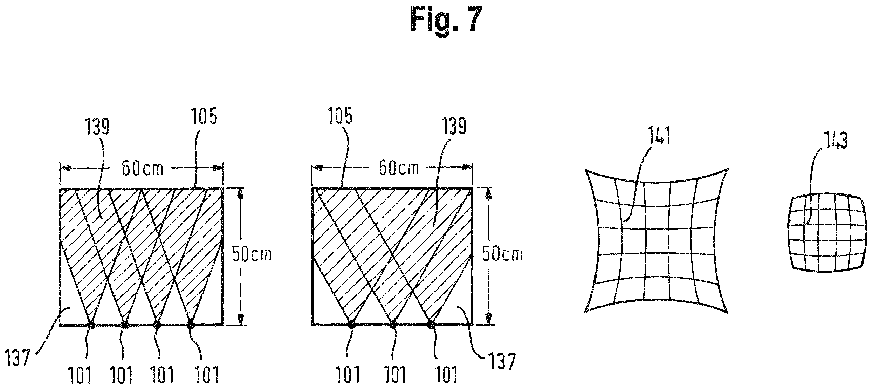

Fig. 7 zeigt eine Aufsicht auf das Kältefach 105 bei Verwendung vom mehreren Kameramodulen 105. Links ist eine Anordnung mit vier Kameramodulen 101 mit einem Bildöffnungswinkel von 40° gezeigt. Demgegenüber ist rechts eine Anordnung mit drei Kameramodulen 101 und einem Bildöffnungswinkel von 60° gezeigt. Bei größerem Bildöffnungswinkel können weniger Kameramodule 101 verwendet werden, um einen gleichen Sichtbereich 139 abzudecken.

Der Bildöffnungswinkel bestimmt die Anzahl der Kameramodule 101, um ein geschlossenes Abbild erzeugen zu können. Zwischen dem Bildöffnungswinkel und der Anzahl der Kameramodule 101 kann je nach Größe des Kältefachs 105 ein Kompromiss gefunden werden. Ein größerer Bildöffnungswinkel führt jedoch zu einer stärkeren Verzeichnung. Beispielsweise ergibt sich eine kissenförmige Verzeichnung 141 oder eine tonnenförmige Verzeichnung 143. Typ und Stärke der Verzeichnung 141 und 143 können zur weiteren Bildverarbeitung identifiziert und kompensiert werden. Hierzu kann ein Muster verwendet werden.

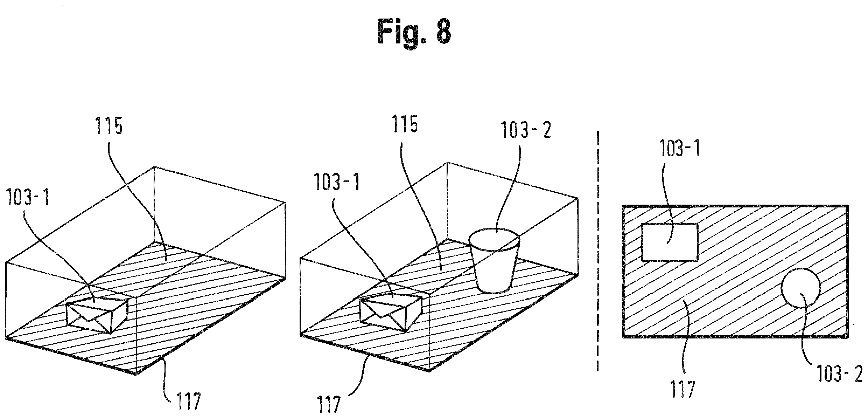

Fig. 8 zeigt ein Kältefach 105 mit einer Sensormatte 115 zum Erfassen einer Veränderung einer Belastung eines Fachbodens 117. Die folienartige Sensormatte 115 wird zur Erkennung von Gewichtsveränderungen genutzt werden. Die Sensormatte 115 ist wenige Millimeter dick und wird auf den Fachboden 117 aufgelegt. Die Sensormatte 115 misst die Veränderung von Belastungen auf dem horizontalen, flachen und festen Fachboden 117 und eignet sich zur Überwachung von freistehendem und gestapeltem Kühlgut 103 auf dem Fachboden 117. Hierdurch lassen sich beispielsweise Füllstände von Behältnissen durch einen Vergleich des Gewichtes mit einem Initialwert ermitteln. Daneben lassen sich auch Umplatzierungen des Kühlgutes 103 verfolgen, so dass eine Detektion der Position erfolgt. Zudem kann die Position eines neu eingestellten Kühlgutes 103-2 erfasst werden. Wird das Kühlgut 103-2 beispielsweise zu dem Kühlgut 103-1 auf dem Fachboden 117 hinzugefügt, erkennt die Sensormatte 117 den Flächenbereich, auf dem das Kühlgut 103-2 hinzugefügt worden ist. Dadurch lassen sich Veränderungen in dem Kältefach 105 zusätzlich zu einer optischen Veränderung in den von dem Kameramodul 101 erfassten Bilddaten erkennen.

Zusätzlich kann das Kältegerät 100 ein Lesegerät für Funketiketten (RFID-Etiketten) umfassen, so dass das Kühlgut 103 im Kältefach 105 mittels eines Auslesens der Etiketten erfasst werden kann. Das Lesegerät für Funketiketten ist eine elektronische Schaltung, die in der Lage ist, die in elektronischen Etiketten gespeicherte Information mittels Funkwellen auszulesen.

Sowohl das Lesegerät für Funketiketten als auch die Sensormatte 115 können als zusätzliche Sensoren zur Ergänzung einer optischen Bilderfassung vorgesehen sein, beispielsweise als Ersatz oder Ergänzung zu der optischen Erkennung eines EAN-Codes. Dadurch wird die Zuverlässigkeit erhöht und es werden weitere Anwendungen ermöglicht.

Daneben kann das Kameramodul 101 eine steuerbare Schwenkeinrichtung zum Drehen einer Aufnahmerichtung des Kameramoduls 101 und/oder eine steuerbare Zoomeinrichtung zum Vergrößern einer Aufnahme des Kameramoduls 101 umfassen. Zusätzlich kann das Kameramodul 101 eine Verschiebungseinrichtung zum steuerbaren horizontalen und/oder vertikalen Verschieben des Kameramoduls 101 an einer Wand des Kältegerätes 100 umfassen. Die Schwenkeinrichtung, die Verschiebungseinrichtung und die Zoomeinrichtung können mittels einer geeigneten Mechanik in Verbindung mit einem elektromotorischen Antrieb realisiert sein und über eine Prozessoreinrichtung über einen Datenbus gesteuert werden.

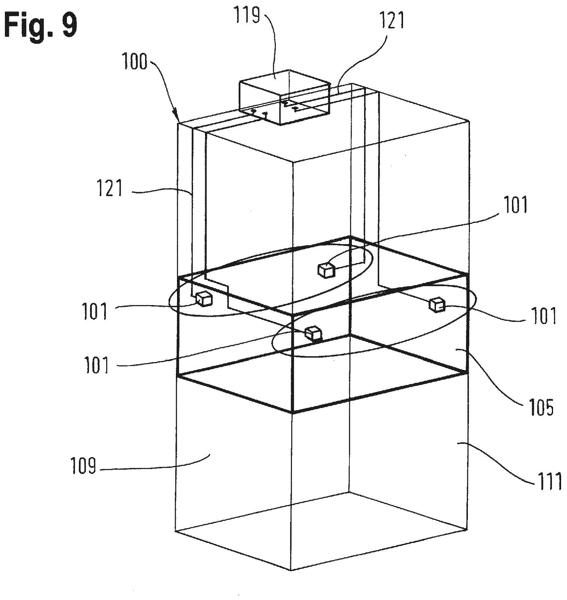

Fig. 9 zeigt ein Kältegerät 100 mit dem Datenbus 121. Das Kältefach 105 umfasst vier Kameramodule 101, die in den jeweiligen Ecken des Kältefachs 105 angeordnet sind. Zusätzlich umfasst das Kältegerät 100 eine Prozessoreinrichtung 119, an die die Bilder von den einzelnen Kameramodulen 101 übermittelt werden. Die Prozessoreinrichtung 119 umfasst einen Prozessor und einen Speicher und dient zur Verarbeitung der übermittelten Bilddaten.

Ein Datenbus 121 dient zur Übermittlung der Bilddaten von dem Kameramodul 101 zu der Prozessoreinrichtung 119. Ein Datenbus ist ein System zur Datenübertragung zwischen mehreren Teilnehmern über einen gemeinsamen Übertragungsweg, bei dem die Teilnehmer nicht an der Datenübertragung zwischen anderen Teilnehmern beteiligt sind.

Jedes der vier Kameramodule 101 ist mit einem separaten Datenbus 121 verbunden. An diese Datenbusse 121 können weitere Geräte angeschlossen werden und gesteuert werden. Der Datenbus 121 ist teilweise in der Seitenwand 109 des Kältegerätes 100 integriert. Der Datenbus 121 ist durch elektrische Leitungen gebildet, die Signale von den Kameramodulen 101 zu der Prozessoreinrichtung 119 übertragen.

Der Datenbus 121 ist beispielsweise ein serieller Bus, mit dem die einzelnen Bits oder Datenpakete in einer seriellen Datenübertragung nacheinander (seriell) über die Leitung übertragen werden. Der Datenbus 121 implementiert beispielsweise einen USB-Standard, einen I2C-Standard, einen SPI-Standard oder einen CAN-Standard, oder beispielsweise einen DBus2-Standard oder DBus3-Standard. Der Datenbus 121 ist beispielsweise ein Hi-Speed Bus (USB). Ein serieller Datenbus 121 weist den Vorteil auf, dass dieser mit einer geringen Anzahl von Leitungen realisiert werden kann.

Die Kameramodule 101 und die Prozessoreinrichtung 119 verfügen ebenfalls über eine serielle Schnittstelle zum Anschließen des Datenbusses 121. Vorteilhaft ist die Verwendung von Kameramodulen 101 und Systemen, für die bereits Treiber existieren. Der Datenbus 121 kann zu diesem Zweck mit Anschlusseinrichtungen, wie beispielsweise Steckverbindern, zum Anschließen der Kameramodule 101 vorkonfektioniert sein. In diesem Fall kann bei einem Defekt das Kameramodul 101 auf einfache Weise ausgetauscht und ersetzt werden. Zudem können der Datenbus 121 und angeschlossene Komponenten derart ausgebildet sein, dass die Komponenten, wie beispielsweise Kameramodule 101 oder Beleuchtungseinrichtungen 102 über den Datenbus 121 mit elektrischer Leistung oder Strom versorgt werden. Dadurch verringert sich ein Verkabelungsaufwand im Inneren des Kältegerätes 100.

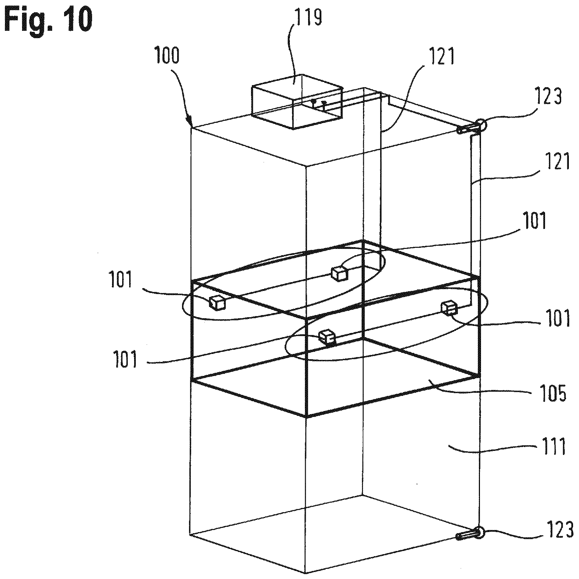

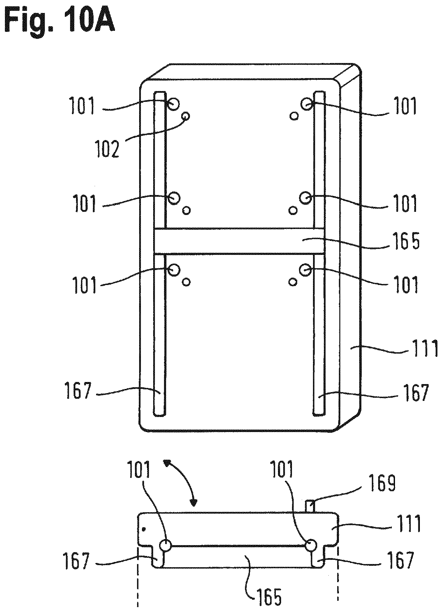

Fig. 10 zeigt ein weiteres Kältegerät 100 mit dem Datenbus 121. Das Kältefach 105 umfasst vier Kameramodule 101, die in den jeweiligen Ecken des Kältefachs 105 angeordnet sind. Jeweils zwei der vier Kameramodule 101 sind an dem gleichen Datenbus 121 angeschlossen. Zwei der Kameramodule 101 sind in einer Tür 111 des Kältegerätes 100 angeordnet und erzeugen eine Frontalansicht des Kältefachs 105. Der Datenbus 121 zu diesen Kameramodulen 101 ist mittels einer Kabeldurchführung durch ein Scharnier 123 der Tür 111 geführt.

Den jeweiligen Kameramodulen 101 ist eine logische oder physikalische Adresse zugeordnet, über die die Kameramodule 101 an dem Datenbus 121 einzeln ansprechbar sind. Zusätzlich können nach Bedarf weitere lokale Verteilerknoten vorgesehen sein. Die Dauer einer Bildabfrage von der Prozessoreinrichtung 119 über den Datenbus 121 sollte eine vorgegebene Zeitspanne nicht überschreiten.

Fig. 10A zeigt eine schematische Ansicht und eine Querschnittsansicht einer Anordnung von sechs Kameramodulen 101 auf der Innenseite einer Tür 111. An der Außenseite umfasst die Tür 111 einen Türgriff 169. Die Kameramodule 101 erfassen die Bilddaten aus einem gleichen Bereich im Inneren eines Kältefachs 105 von unterschiedlichen Blickwinkeln her. Je zwei der Kameramodule 101 bilden ein Paar mit einem ersten und einem zweiten Kameramodul 101 für eine stereoskopische Bildaufnahme.

Je zwei der Kameramodule 101 sind in der Tür 111 als Paar auf der gleichen Höhe angeordnet. Ein erstes Kameramodul 101 des Paares ist an einem rechten Türholm 167 angeordnet und ein zweites Kameramodul 101 ist an einem linken Türholm 167 angeordnet. Die Kameramodule 101 sind in einer Ecke der Türholme 167 an der Innenseite der Tür 111 angeordnet. Die Kameramodule 101 sind beispielsweise in einem Körper der Tür 111 integriert, so dass diese nicht aus der Innenseite der Tür 111 herausstehen.

Jedem Kameramodul 101 ist jeweils eine Beleuchtungseinrichtung 102 zugeordnet, beispielsweise in Form einer weißen Leuchtdiode in der Tür 111. Die jeweilige Beleuchtungseinrichtung 102 ist schräg neben dem jeweiligen Kameramodul 101 angeordnet.

In der Mitte der Tür 111 ist ein Türabsteller 165 gebildet, in den Kühlgut 103 abgestellt werden kann, wie beispielsweise Flaschen. Der Türabsteller 165 ist nicht höhenverstellbar. Zwei der Kameramodule 101 befinden sich direkt unterhalb des Türabstellers 165, so dass diese nicht von Kühlgut 103 im Inneren des Kältegerätes 100 verstellt werden können. Zwei weitere Kameramodule 101 sind in einem oberen Bereich der Tür 111 angeordnet, so dass auch diese nicht von Kühlgut verstellt werden können und eine Bildaufnahme von schräg oben durchgeführt werden kann.

Die jeweiligen Paare an Kameramodulen 101 sind auf unterschiedlichen Höhen auf der Innenseite der Tür 111 angeordnet, so dass die Aufnahme aus unterschiedlichen Blickwinkeln gewonnen werden kann. Dazu erfasst beispielsweise jeweils ein Paar von Kameramodulen 101 einen gleichen Bereich im Inneren eines Kältefachs 105 von unterschiedlichen Blickwinkeln her.

Die Tür 111 umfasst einen integrierten Datenbus 121 zum Verbinden der Kameramodule 101 mit einer Prozessoreinrichtung 119, so dass die von den Kameramodulen 101 gewonnen Bilddaten zur weiteren Verarbeitung übermittelt werden können. Alle sechs Kameramodule 101 sind beispielsweise mit dem gleichen Datenbus 121 verbunden. Dieser Datenbus 121 kann als ein serieller Datenbus ausgebildet sein, so dass die Übertragung der Bilddaten mit einem geringen Verkabelungsaufwand durchgeführt werden kann. Jeweils das erste und das zweite Kameramodul 101 eines Paares kann jeweils eine Zoomeinrichtung zum synchronen Vergrößern der stereoskopischen Bildaufnahme umfassen. Im Allgemeinen können die Kameramodule 101 auch an anderen Orten im Inneren des Kältegerätes angeordnet sein, wie beispielsweise an einer Rückseite des Kältegerätes 100.

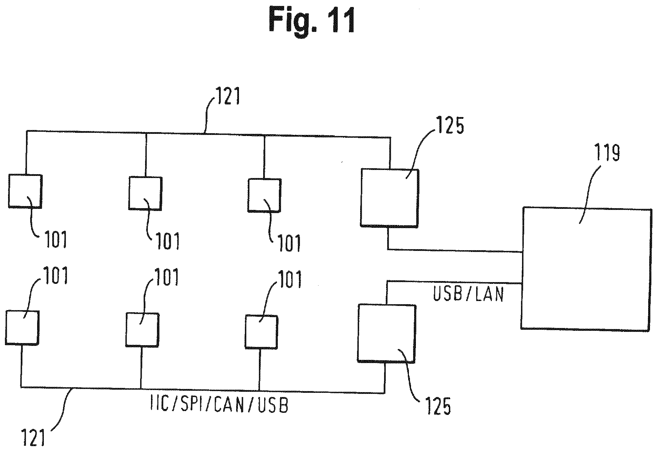

Fig. 11 zeigt eine schematische Ansicht eines Datenbusses 121 in einem Kältegerät 100 mit mehreren Verteilerknoten 125. Die Verteilerknoten 125 bilden jeweils ein Hilfsmodul zum Anschließen der Kameramodule 101 und weisen entsprechende Schnittstellen auf. Die Verteilermodule 125 sind beispielsweise mittels einer eingebetteten Plattform realisiert, wie beispielsweise einem Beagleboard.

Die Verteilerknoten 125 dienen zum Verteilen von Bilddaten und Steuersignalen zwischen der Prozessoreinrichtung 119 und den Kameramodulen 101 und können Bildwandlungseinheiten bilden. Daneben kann in dem Verteilerknoten 125 eine Datenkomprimierung durchgeführt werden. Außerdem kann in den Verteilerknoten 125 auch eine Protokollumsetzung stattfinden.

Die an dem Datenbus 121 angeschlossenen Kameramodule 101 können einen Mikrokontroller umfassen, durch den eine Komprimierung der gewonnenen Bilddaten erfolgt. Dadurch kann eine Komprimierungseinrichtung zum Komprimieren der Bilddaten realisiert werden. Bei dieser Komprimierung werden die im Bitmap-Format gewonnenen Bilddaten beispielsweise in Bilddaten nach dem JPEG-Format umgewandelt und im JPEG-Format über den Datenbus 121 übertragen. Dadurch entsteht der Vorteil, dass die Übertragung mit weniger Daten durchgeführt wird und eine kürzere Zeitspanne in Anspruch nimmt.

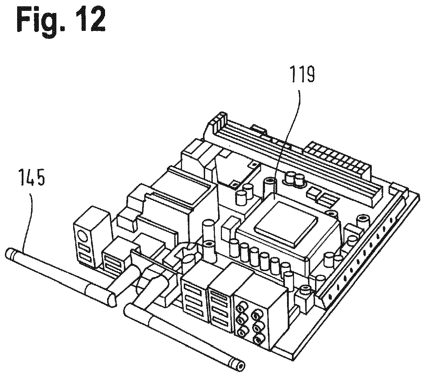

Fig. 12 zeigt eine perspektivische Ansicht der Prozessoreinrichtung 119. Die Prozessoreinrichtung 119 umfasst eine Schnittstelle 145 zum Übertragen der Bilddaten an ein externes Netzwerk. Die Schnittstelle 145 ist beispielsweise eine drahtlose WLAN-Schnittstelle, eine Bluetooth-Schnittstelle, eine Ethernet-Schnittstelle oder eine Mobilfunkschnittstelle wie GSM, UMTS, oder LTE. Über die Schnittstelle 145 können die Bilddaten an ein externes Netzwerk bereitgestellt werden. Gegebenenfalls ist mittels der Schnittstelle 145 ein direkter Anschluss an einen Personal Computer möglich. Der Personal Computer kann zur Verarbeitung der Sensordaten verwendet werden, beispielsweise Verzerrungen herausnehmen, Rauschen entfernen, künstliches Schärfen oder Kontrast erhöhen.

Die Prozessoreinrichtung 119 dient zum Verarbeiten der Sensor- und Bilddaten aus den Kameramodulen 101. Für eine Bilderkennung kann eine Programmbibliothek mit Algorithmen für die Bildverarbeitung und maschinelles Sehen verwendet werden, wie beispielsweise OpenVC. Realisierbare Methoden der Bilderkennung sind beispielsweise das Erkennen einer Veränderung, das Erkennen eines Barcodes oder das Erkennen definierter Logos (Mustererkennung). Als Betriebssystem der Prozessoreinrichtung 119 kann Linux verwendet werden.

Mittels der Prozessoreinrichtung 119 können die Bilddaten von den Kameramodulen 101 abgerufen werden und die so übermittelten Bilddaten verarbeitet werden. In diesem Zusammenhang kann eine Bildbearbeitung durchgeführt werden, beispielsweise ein Entstören oder Zusammensetzen der Bilddaten zu größeren Einheiten. Zusätzlich kann eine Analyse und Auswertung der Bilddaten vorgenommen werden, beispielsweise ein erkennen von Differenzbildern oder Differenzobjekten. Bei dieser Auswertung lassen sich von den Kameramodulen 101 aufgenommenes Kühlgut 103 identifizieren und zugehörige Zusatzinformationen ermitteln. Die Bilddaten können über ein drahtloses Netzwerk bereitgestellt werden.

Zusätzlich kann von der Prozessoreinrichtung 119 eine Steuerung einer Beleuchtungseinrichtung 102 zum Beleuchten des Kältefachs 105 während einer Aufnahme durchgeführt werden. Zu diesem Zweck umfasst das Kältegerät 100 eine Beleuchtungseinrichtung 102, die an dem Datenbus 121 angeschlossen ist und über diesen steuerbar ist.

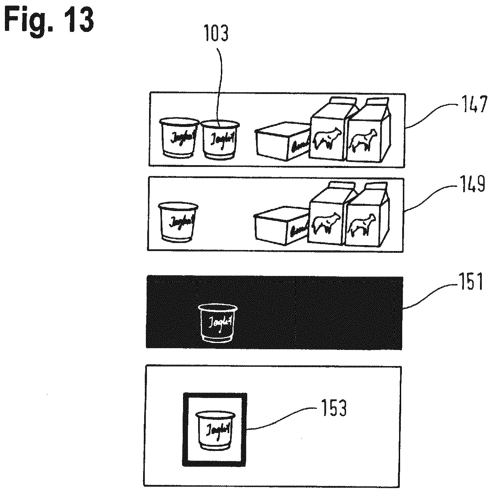

Fig. 13 zeigt ein erstes von dem Kameramodul 101 aufgenommenes Bild aus ersten Bilddaten 147 und ein zweites von dem Kameramodul 101 aufgenommenes Bild aus zweiten Bilddaten 149. Die zweiten Bilddaten 149 sind zu einem späteren Zeitpunkt als die ersten Bilddaten 147 aufgenommen worden. Mittels der Prozessoreinrichtung 119 oder einem externen Kameramodulbediengerät, auf dem eine Applikation (App) läuft, kann eine Frischebestimmungseinrichtung realisiert werden, die zum Bestimmen eines Frischezustands des Kühlgutes auf Basis der ersten Bilddaten 147 und der zweiten Bilddaten 149 dient. Der Zeitabstand zwischen den ersten und den zweiten Bilddaten 147 und 149 beträgt beispielsweise einen Tag.

In beiden Fällen werden durch die Beleuchtungseinrichtung 102 weitgehend gleiche Beleuchtungsverhältnisse im Kältefach 105 realisiert, um eine Vergleichbarkeit der zeitversetzten Aufnahmen zu gewährleisten. Damit die Bilddaten 147 und 149 nicht durch Umgebungslicht verfälscht werden, das bei einem Öffnen der Tür 111 des Kältegerätes 100 in das Kältefach 105 eintritt, umfasst das Kältegerät 100 einen Sensor zum Erfassen einer Öffnung der Tür 111. Wird durch den Sensor erfasst, dass die Tür 111 des Kältegerätes 100 offen steht, wird keine Erfassung der Bilddaten durchgeführt. Erst bei geschlossener Tür 111 werden die Bilddaten erfasst. Die Bilddaten werden nach dem Schließen der Tür 111 aufgenommen, nachdem eine gleichmäßige Beleuchtung des Innenraums des Kältefachs 105 vorgenommen worden ist.

Zudem lässt sich durch einen Vergleich der ersten Bilddaten und der zweiten Bilddaten ein Hinzustellen oder Entnehmen von Kühlgut 103 feststellen. Die Bilddaten 151 zeigen die Subtraktion der zweiten Bilddaten 149 von den ersten Bilddaten 147. Die ersten Bilddaten 147 und die zweiten Bilddaten 149 sind beispielsweise Dreifarb-Bilddaten (RGB) mit einer Farbauflösung von 24 Bit je Bildpunkt.

Durch die Subtraktion kann der Unterschied und die Veränderung zwischen beiden Bilddaten 147 und 149 ermittelt werden. Im gezeigten Beispiel stellt der Bildbereich 153 das Kühlgut 103 dar, das aus dem Kältefach 105 entnommen worden ist. Ein Einblenden oder Ausblenden des Inhalts des Kältefachs 105 sowie der ermittelten Veränderung kann auf einer Anzeige des Kältegerätes 100 erfolgen, beispielsweise einem Tablet-PC oder einem Smartphone. Daneben kann eine Kontur des Kühlgutes 103 und der bewirkten Veränderung hervorgehoben werden.

In ähnlicher Weise lässt sich eine zeitliche Veränderung des Kühlgutes 103 bestimmen, das aus einer verderblichen Ware besteht. Eine durch die Prozessoreinrichtung 119 oder das Kameramodulbediengerät mittels einer Applikation gebildete Frischebestimmungseinrichtung, bestimmt den Frischezustand des Kühlgutes 103 auf Basis eines Farbunterschieds zwischen den ersten Bilddaten 147 und den zweiten Bilddaten 149. Anhand eines auftretenden Farbunterschieds kann dann mit einem geeigneten Algorithmus bestimmt werden, ob das Kühlgut 103 noch frisch oder haltbar ist. Zusätzlich werden zur Frischebestimmung die Daten über Gewichtsveränderungen genutzt werden, die durch die Sensormatte 115 erfasst werden.

Außerdem ist die Frischebestimmungseinrichtung ausgebildet, die Art des Kühlgutes 103 auf Basis der ersten Bilddaten oder der zweiten Bilddaten zu erfassen. Die Frischebestimmungseinrichtung kann beispielsweise automatisch erkennen, um welche Art einer verderblichen Ware es sich bei dem Kühlgut 103 handelt. Beispielsweise ist die Frischebestimmungseinrichtung durch eine Bildanalyse in der Lage zu erkennen, ob das Kühlgut 103 im Kältefach 105 aus Bananen oder Tomaten besteht. Ein Bildauswertungsalgorithmus vergleicht die Aufnahme des Kameramoduls 101 mit vorgespeicherten Bilddaten und erkennt dadurch das Kühlgut 103.

Sollte eine automatische Erkennung der Art des Kühlgutes 103 fehlschlagen, kann das Kältegerät 100 eine Eingabevorrichtung zum manuellen Eingeben der Art des Kühlgutes 103 umfassen. Diese wird beispielsweise durch eine berührungsempfindliche Anzeige oder ein Anzeigegerät gebildet, auf der unterschiedliche Arten des Kühlgutes 103 in Menüform angezeigt werden. Ein Benutzer wählt durch Tippen auf den entsprechenden Menüpunkt ein bestimmtes Kühlgut aus, das dieser im Kältefach 105 deponiert hat. Anhand der eingegebenen oder ermittelten Art des Kühlgutes 103 lässt sich der Frischezustand des Kühlgutes 103 mittels eines Farbunterschiedes präziser bestimmen.

Zum Erfassen eines Frischezustands kann ein spezielles Kameramodul 101 verwendet werden, das die Bilddaten nicht nur im sichtbaren Spektralbereich sondern gleichzeitig auch im Infrarot-Spektralbereich bestimmt. Das Kameramodul 101 kann ein dichroitisches Element umfassen, das einen Strahlengang des Infrarotlichtes von dem des sichtbaren Lichts trennt.

Das dichroitische Element ist beispielsweise ein optisches Prisma, das einen Lichtstrahl in zwei Strahlen unterschiedlicher Spektren oder Farben aufteilt. Das dichroitische Element ist beispielsweise aus einem Glas gefertigt, bei dem bestimmte Oberflächen mit dichroitischen Spiegeln versehen sind, die Licht abhängig von dessen Wellenlänge reflektieren oder durchlassen.

Das sichtbare Licht wird durch ein erstes Lichtsensorfeld erfasst und das abgetrennte Infrarotlicht durch ein zweites Lichtsensorfeld. Die Anzahl, Anordnung und Art der Kameramodule 101 sowie der Beleuchtung wird im Allgemeinen in Abhängigkeit des gewünschten Ausführungskonzeptes bestimmt.

Um das Kühlgut 103 während der Bildaufnahme zu beleuchten, ist im Kältefach 105 eine Beleuchtungseinrichtung 102 vorgesehen, die das Kältefach 105 in gleicher Weise bei jeder Aufnahme beleuchtet. Um eine spektrale Analyse des Kühlgutes 103 bei einer vorgegebenen Frequenz durchführen zu können, kann die Beleuchtungseinrichtung 102 beispielsweise monochromatisches und schmalbandiges Licht einer vorgegebenen Frequenz aussenden. Beispielsweise umfasst die Beleuchtungseinrichtung 102 eine durchstimmbare Leuchtdiode zum Aussenden eines monochromatischen Lichtes veränderlicher Wellenlänge. Allerdings kann die Beleuchtungseinrichtung 102 auch derart ausgebildet sein, dass diese polychromatisches weißes Licht oder infrarotes Licht aussendet.

Das Kältegerät 100 kann ein Steuer- und Anzeigegerät umfassen, das den bestimmten Frischezustand des Kühlgutes 103 einem Benutzer anzeigt. Überschreitet der erfasste Farbunterschied oder eine farbliche Änderung von beispielsweise Obst oder Gemüse einen vorgegebenen Grenzwert, kann ein Benutzer über das Anzeigegerät benachrichtigt werden. Als Steuer- und Anzeigegerät kann ein Tablet-PC oder Smartphone eingesetzt werden.

Liegen die Bilddaten 147 und 149 in der Prozessoreinrichtung 119 oder dem Anzeigegerät vor, können hieraus weitere Informationen mittels Bilderkennungsalgorithmen extrahiert werden, beispielsweise mittels einer Applikation auf dem Kameramodulbediengerät. Diese Informationen können dann auf dem Kameramodulbediengerät angezeigt werden. Beispielsweise lassen sich anhand der aufgenommenen Bilddaten 147 und 149 nicht nur Veränderungen erkennen, sondern es lassen sich auch Strichcodes (Bar Codes) oder QR-Codes des Kühlgutes 103 erfassen oder eine Schrifterkennung durchführen. Eine weitere Auswertung der Codes kann über eine Produktdatenbank im Internet erfolgen, in der die entsprechenden Codes hinterlegt sind. Zudem können die ermittelten Produktdaten zu erfassten Änderungen in den Bilddaten zugeordnet werden.

Zudem ermöglicht eine Bildanalyse mittels Mustererkennung eine Identifizierung von Produktlogos. Hierzu sollten die Produktlogos eindeutig erkennbar sein und nicht von anderem Kühlgut 103 verdeckt sein. Sofern die Aufnahme ausreichende Details des Produktlogos beinhaltet, kann eine zuverlässige optische Erkennung des Produktes gewährleistet werden. Die Prozessoreinrichtung 119 kann mittels geeigneter Algorithmen auf eine Vielzahl von Produkten eintrainiert werden.

In Kombination mit der Produkterkennung kann eine Inhaltsliste des Kältegerätes 100 erstellt werden. Die Produkterkennung wird dabei mit Hilfe einer optischen Erkennung eines EAN-Codes auf dem Produkt realisiert. Produkte ohne EAN-Code, wie beispielsweise Obst oder Gemüse, können manuell aus einer Auswahlliste gewählt werden. Hierbei kann eine Produktregistrierung durch Erkennen des EAN-Codes durchgeführt werden. Nachdem das Produkt in das Kältegerät 100 gestellt worden ist, wird dann die hierdurch hervorgerufene Veränderung in den Bilddaten zugeordnet und hervorgehoben (Tracing).

Die Produktdatenbank des Kältegerätes 100 kann auf den gesamten Küchenbereich ausgeweitet werden. Hierzu wird zunächst ein Lagerort ausgewählt und eine Produktregistrierung durch Erkennen des EAN-Codes durchgeführt. Anschließend erfolgt die Ablage des Produktes durch den Benutzer. Die Bestandsliste kann bei der Entnahme von Waren aktualisiert werden. Eine Produkterkennung anhand des EAN-Codes und eine Zuordnung zu den Bilddaten sind ebenfalls möglich.

Eine Angabe von Zusatzinformationen, wie beispielsweise ein Mindest-Haltbarkeits-Datum (MHD) oder eine Mindestbestandsmenge, zu einem registrierten Produkt kann zur Überwachung verwendet werden. In diesem Fall kann der Benutzer die Zusatzinformation (MHD) angezeigt bekommen, wenn er das Produkt auf einer Anzeige oder in der Datenbank anwählt. Geht der Bestand des Produktes zur Neige oder läuft das Produkt ab, kann der Benutzer über das Kameramodulbediengerät benachrichtigt werden. Je nach Produkt können auch Standardlagerdauern mit hinterlegt werden, die in Abgleich mit der eingestellten Kühlfachtemperatur und der Bildverarbeitung Angaben zur Resthaltbarkeit ermöglichen.

In diesem Zusammenhang findet beispielsweise eine Fusion der Bilddaten mit den Produktdaten durch Speichern der Konturinformation aus einer Bilderkennung nach der Registrierung eines Produktes statt. Mittels der Produktdatenbank können neben der Produktüberwachung weitere Anwendungen realisiert werden. Diese Anwendungen können beispielsweise in dem Erstellen eines Rezeptvorschlags anhand der Bestandsliste oder in einem Erstellen einer Einkaufsliste für häufig bezogene Produkte liegen. Ein lernfähiges System kann hierbei die Gewohnheiten des Benutzers berücksichtigen. Eine Online-Schnittstelle auf die Bestandsliste oder die Bilddaten ermöglicht den bequemen Zugriff von Unterwegs. Neben der reinen Bilderkennung und Bildanzeige stellt die Produkterfassung und Produktdatenbank mit der Anzeige von Zusatzinformationen für den Benutzer einen erhöhten Mehrwert dar.

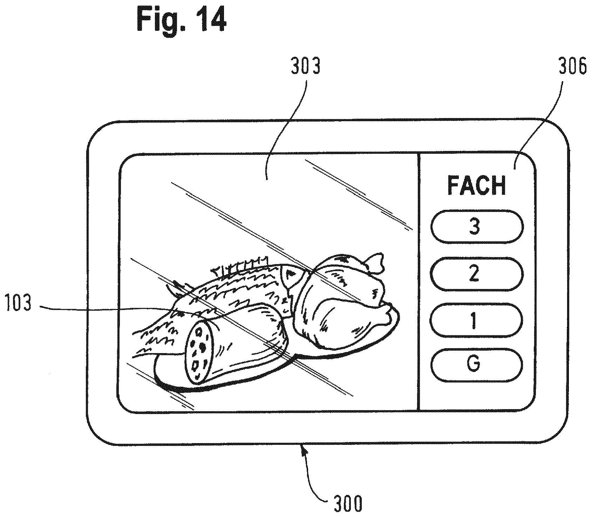

Fig. 14 zeigt eine Ansicht eines tragbaren Kameramodulbediengerätes 300 mit einer berührungsempfindlichen Anzeige 303 (Touchscreen). Das Kameramodulbediengerät 300 ist beispielsweise ein Tablet-PC, der mittels eines WLANs mit dem Kältegerät 100 verbunden ist oder ein Smartphone, das mittels des Mobilfunknetzes mit dem Kältegerät 100 verbunden ist. Das Kameramodulbediengerät 300 kann jedoch auch mittels einer USB-Schnittstelle mit dem Kältegerät 100 verbunden sein. Die USB-Schnittstelle kann jedoch auch zum Laden des Kameramodulbediengerätes 300 verwendet werden.

Auf dem Kameramodulbediengerät 300 kann eine Anwendung oder Applikation ausgeführt werden, wie beispielsweise ein Computerprogramm. Zur Montage des Kameramodulbediengerätes 300 kann ein Montagekit vorgesehen sein. Das Kameramodulbediengerät 300 ist über ein drahtloses Netzwerk mit einem Router verbunden. Das Kameramodulbediengerät 300 kann als Bild-Server oder als Grafikrechner fungieren und die Bilddaten über ein WLAN sichern. Das tragbare Kameramodulbediengerät 300 kann von einem Benutzer ausgetauscht oder modernisiert werden.

Zwischen dem tragbaren Kameramodulbediengerät 300 und dem Kältegerät 100 können Daten bidirektional ausgetauscht werden. Das drahtlose Kameramodulbediengerät 300 ist ein Teil eines Kältegerätesystems und dient zum Anzeigen der von den Kameramodulen 101 erfassten Bilddaten. Der Benutzer kann das angezeigte Kältefach 105 somit in der Applikation auf dem Kameramodulbediengerät 300 auswählen. Daneben kann ein Ansichtswechsel durch Wischen auf der berührungsempfindlichen Anzeige 303 nach oben und unten oder durch Kippen des Kameramodulbediengerätes 300 nach rechts oder links erfolgen. Beispielsweise kann eine Winkelhaltung des Kameramodulbediengeräts 300 bestimmen, welches Kältefach 105 angezeigt wird.

Die Kameramodule 101 im Inneren des Kältefachs 105 weisen einen großen Bildöffnungswinkel auf. Für eine geschlossene Darstellung der Frontansicht werden mehrere Kameramodule 101 verwendet. Das Kältegerät 100 kann mehrere Kameramodule 101 umfassen, die derart im Kältefach 105 angeordnet sind, dass das Kühlgut 103 von allen Seiten aufgenommen wird und durch Zusammensetzen der Einzelbilder eine Rundumansicht erzeugt wird. Die Auswahl des Blickwinkels der Rundumansicht auf das Kühlgut 103 erfolgt durch Wischen auf der berührungsempfindlichen Anzeige 303 nach links und rechts.

Ein Kameramodul 101 mit einem großen Bildöffnungswinkel (Fischauge), das in einer Fachdecke 113 angeordnet ist, erlaubt eine Aufsicht auf das Kühlgut 103 im Kältefach 105. Ein weiteres Kameramodul 101 ist in einer Tür 111 des Kältegerätes 100 angeordnet. Das Kältefach 105 umfasst zusätzlich eine Beleuchtungseinrichtung 102 zur gleichmäßigen Beleuchtung des Kühlgutes 103. In diesem Fall und in allen anderen Fällen kann die Auswahl der jeweiligen Ansicht durch ein Kippen des Kameramodulbediengerätes 300 erfolgen.

Im Allgemeinen kann das Kältegerät 100 als ein Teil des Kältegerätesystems 200 ein erstes Kameramodul 101 zum Erfassen erster Bilddaten des Kühlgutes 103 aus einer ersten Perspektive und ein zweites Kameramodul 101 zum Erfassen zweiter Bilddaten des Kühlgutes 103 aus einer zweiten Perspektive umfassen. Ein Wechsel der Perspektive kann allgemein bei einer Berührung der berührungsempfindlichen Anzeige 303 erfolgen. Das Kältegerät 100 kann eine beliebige Beleuchtungseinrichtung 102 umfassen, die zum Beleuchten des Kühlgutes 103 in dem Kältefach 105 während einem Erfassen von Bilddaten geeignet ist. Die Beleuchtungseinrichtung 102 kann durch das Kameramodulbediengerät 300 steuerbar sein.

Seitlich ist auf dem Kameramodulbediengerät 300 eine Menüauswahl 305 angezeigt, über die das jeweilige Kältefach 105 mit dem entsprechenden Kameramodul 101 ausgewählt werden kann. Bei Auswahl des Kältefachs 105 durch Berühren der berührungsempfindlichen Anzeige 303 wird dessen Inhalt angezeigt. Zusätzlich kann die jeweilige Ansicht durch Wischen auf der berührungsempfindlichen Anzeige 103 ausgewählt werden. Die Ansicht kann vergrößert oder verkleinert werden, beispielsweise durch eine Auseinanderziehbewegung mit den Fingern auf der berührungsempfindlichen Anzeige 103. Daneben können Zusatzinformationen eingeblendet werden, wie beispielsweise ein Frischezustand des Kühlgutes 103 oder Veränderungen in den Bilddaten im Vergleich zu gespeicherten früheren Bilddaten.

Das Kameramodulbediengerät 300 kann die erfassten Bilddaten des Kühlgutes 103 mit gespeicherten Bilddaten des Kühlgutes 103 vergleichen. Daneben kann das Kameramodulbediengerät 300 das Kühlgut 103 anhand der erfassten Bilddaten mittels eines Analysealgorithmus identifizieren. Der Benutzer kann die Bilddaten des Kameramoduls 101 und die verarbeiteten Bilder auf dem Kameramodulbediengerät 300 auswählen, ansehen und zusätzliche Informationen anzeigen lassen, wie beispielsweise die Zuordnung eines Barcodes zu einem bestimmten Produkt. Die Bilddaten und die zugehörige Zusatzinformation werden hierzu von der Prozessoreinrichtung 119 des Kältegerätes 100 abgefragt, verarbeitet und bereitgestellt. Hierzu können die Kameradaten und Zusatzinformationen von einem externen zentralen Rechnersystem abgefragt, verarbeitet und bereitgestellt werden. Eine Zuordnung zwischen dem Kältegerät 100 und dem Kameramodulbediengerät 300 kann über eine zentrale Recheneinheit erfolgen, beispielsweise über Home Connect.

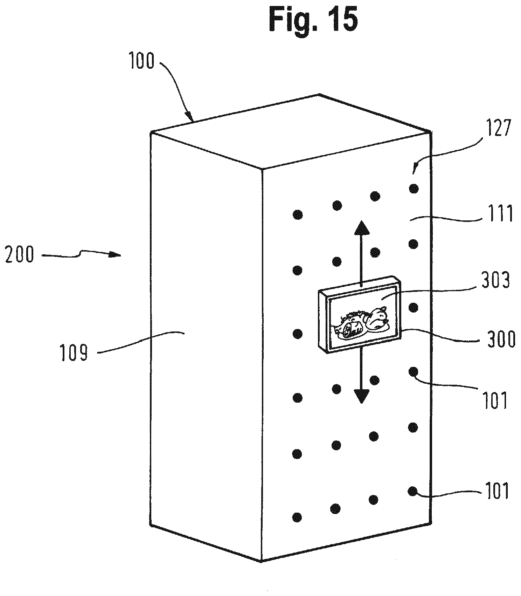

Fig. 15 zeigt eine schematische Ansicht eines Kältegerätes 100 mit einem Kamerafeld 127 in der Tür 111. Das Kältegerät 100 umfasst ein Kamerafeld 127 mit einer Mehrzahl von matrixartig angeordneten Kameramodulen 101, die auf der Innenseite der Tür 111 angeordnet sind. Jedes dieser Kameramodule 101 erzeugt ein Einzelbild in Frontalansicht von der Innenseite des Kältegerätes 100. Die Kameramodule 101 des Kamerafeldes 127 sind derart angeordnet, dass aus den Einzelbildern eine zusammengesetzte Ansicht der vollständigen Vorderansicht wie bei geöffneter Tür 111 erzeugt werden kann. Aus dem Kamerafeld 127 in der Kühlschranktür 111 wird ein Panoramabild zusammengesetzt, das eine geschlossene Aufnahme der Frontseite darstellt. Um ein Zusammenfügen der Einzelbilder zu verbessern, kann eine Kalibrierung der Kameramodule 101 durchgeführt werden.

Weiter umfasst das Kältegerät 100 eine Positionserfassungseinrichtung zum Erfassen einer Position des auf die Außenseite des Kältegerätes 100 aufgelegten Kameramodulbediengerätes 300. Durch diese Positionserfassungseinrichtung lässt sich beispielsweise ein Koordinatenpaar ermitteln, das angibt, an welcher Stelle der Vorderseite des Kältegerätes 100 das Kameramodulbediengerät 300 aufgelegt ist.

Im Anschluss kann ein dem Koordinatenpaar zugeordneter Bildbereich aus der zuvor zusammengesetzten Ansicht an das Kameramodulbediengerät 300 übermittelt werden. Dadurch wird der Eindruck hervorgerufen, dass ein Benutzer mittels des drahtlosen Kameramodulbediengerätes 300 röntgenartig durch die Wand des Kältegerätes 100 hindurchblicken kann. Der Benutzer kann zudem Bereiche der zusammengesetzten Ansicht vergrößern. Bei einer Bewegung des Kameramodulbediengerätes 300 vor der Vorderseite des Kältegerätes 100 verschiebt sich der entsprechende Bildbereich auf dem Kameramodulbediengerät 300 und das der Position des Kameramodulbediengerätes 300 entsprechende Kältefach 105 wird angezeigt. Während das Kameramodulbediengerät 300 außen über das Kältegerät 100 fährt, folgt der angezeigte Bildausschnitt der Position des Kameramodulbediengeräts 300. Auch wenn nur ein Kameramodul verwendet wird, kann ein Bildausschnitt verschoben werden. Im Inneren des Kältegerätes 100 findet hierbei eine gleichmäßige Beleuchtung aller Bereiche statt.

Die Komplexität einer Softwareentwicklung hängt im Allgemeinen mit den gewünschten Zusatzfunktionen zusammen, wie beispielsweise einer Bilderfassung, einer Bilderkennung, einer Produkterkennung (EAN-Code), einem Erkennen der Veränderungen in einem Bild, einer Produktdatenbank und einer Zuordnung der Produkte in den Bilddaten anhand der Erkennung.

Im Kältegerät 100 können lediglich die Kameramodule 101 und eine Schnittstelle (Interface) zum Kameramodulbediengerät 300 bereitgestellt sein. Die Steuerung der Kameramodule 101 und die Auswertung der Bilddaten erfolgt über das Kameramodulbediengerät 300. Daher ist im Kältegerät 100 eine minimale Steuerelektronik realisierbar. Ein Benutzer ist nicht an eine veraltete Hardware gebunden, sondern kann das Kameramodulbediengerät 300 beliebig auswechseln. Optional kann ein Türöffnungs- und -Schließsignal übermittelt werden, aufgrund dessen das Kameramodulbediengerät 300 die Kameramodule 101 steuert. Das Kameramodulbediengerät 300 kann die Bilddaten per WLAN senden und den Inhalt des Kältegerätes 100 anzeigen.

Beispielsweise werden die Bilddaten bei jedem Türschließen gewonnen, dann bereitgestellt oder an einen externen Speicherort übertragen und auf Anforderung dann sofort übermittelt. Eine Beleuchtung bleibt unmittelbar nach einem Türschließen noch für eine Zeit von 300 - 500 ms abrufbar. Dadurch wird der Vorteil erreicht, dass ein zuletzt geänderter aktueller Inhalt erfasst wird, ein geringer zusätzlicher Wärmeeintrag unmittelbar nach einem großen Wärmeeintrag erfolgt und eine Beleuchtung nur durch eine normale Innenbeleuchtung ermöglicht wird.

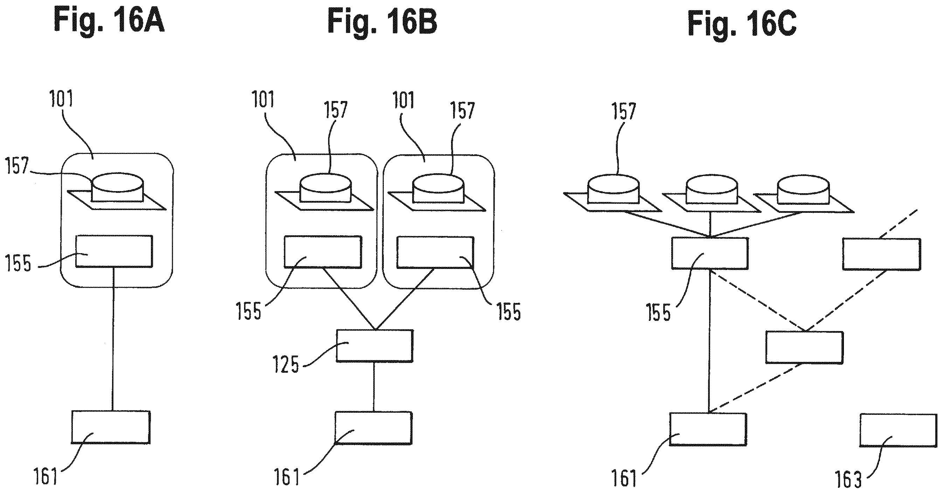

Fig. 16A bis 16C zeigt unterschiedliche Anbindungen von Kameramodulen 101.Die Integration von Kameramodulen 101 und der Steuerung kann auf verschiedene Weise erfolgen.

In Fig.16 A weist das Kameramodul 101 ein Steuerelement 155 und eine Kamera 157 als integrierte Einheit auf und ist an ein Netzwerk 161 angebunden. In Fig. 16B sind mehrere Kameramodule 101 mit den Steuerelementen 155 über eine integrierte Bildverarbeitungseinheit oder einen Verteilerknoten 125 an das Netzwerk 161 angebunden. In Fig. 16C ist ein Mehr-Kameramodul an das Netzwerk 161 angebunden. Das Mehr-Kameramodul kann mit einer integrierten oder separaten Bildverarbeitungseinheit 125 an das Netzwerk 161 angebunden sein. Das Mehr-Steuerelement 155 dient zur Steuerung mehrerer Kameras 157 des Mehr-Kameramoduls. Zusätzlich kann eine Schnittstelle zu einem GSM-Netz 163 vorgesehen sein. Die Kamera 157, die Steuerelemente 155, das Mehrsteuerelement 155, und die Bildverarbeitungseinheit 125 können physikalisch identische Einheiten sein, die unterschiedliche Aufgabe erledigen.

Die Steuerung der Kameramodule 101 kann durch einen Rechner im Kältegerät erfolgen oder separat von der Kältegerätsteuerung vorgesehen sein, beispielsweise auf dem Kameramodulbediengerät 300, wie einem Smartphone und mobilen Tablet PC. Das Kameramodulbediengerät 300 mit dem Bildschirm kann an der Tür 111 befestigt sein.

Das Kameramodulbediengerät 300 kann ein Programm oder eine Applikation (App) ausführen. Die zur Auswertung der Bilddaten und Steuerung der Kameramodule 101 dient. Beispielsweise dient die Applikation zur Frischebestimmung anhand der gewonnenen Bilddaten. Die Frische des Kühlgutes 103 kann von einer Reife des Kühlgutes 103 unterschieden werden.

Bei Produkten die "frieren" wird die Zellstruktur durch Kälteeinwirkung beeinflusst, wie beispielsweise Bananen, Tomaten, Gurken, Zucchini, Auberginen, Südfrüchte. Im Allgemeinen sind Gewicht, Geruch, Geschmack, Farbe, Textur, wie beispielsweise Furchen, Größe, Durchmesser oder Volumen erkennbar. Mittels der Textur kann beobachtet werden, ob ein Produkt noch knackig (crisp) ist. Eine Turgeszenz gibt an, wie stark die Zellen mit Wasser gefüllt sind und ist ein Maß für die Frische.

Eine Applikation zur Ermittlung der Frische erfasst die Informationen zu Produkten, wertet diese aus und stellt diese anderen Verarbeitungseinrichtungen bereit. Ein Basisdatum ist bei vielen Produkten das Mindesthaltbarkeitsdatum (MHD), welches mit dem Produkt verbunden ist und extern bereitgestellt wird.

Nicht verpackte Lebensmittel weisen kein mit dem Produkt verbundenes Mindesthaltbarkeitsdatum auf. zusätzlich kann ein alternatives Haltbarkeitsdatum verwendet werden, dass von dem Produkt, dem Einlagerungszeitpunkt, einer Kühlschrankeinstellung, einer Temperaturschichtung des speziellen Kältegerätes 100 und einer Luftfeuchte abhängt. In diesem Zusammenhang ist ein Ampelsystem möglich:

| | |
|---|---|
| Rot: | nicht erfassbares Mindesthaltbarkeitsdatum |
| Gelb: | alternatives Haltbarkeitsdatum |
| Grün: | Mindesthaltbarkeitsdatum |

Kühlgut wie beispielsweise Fleisch kann undurchsichtig verpackt sein, so dass der Zustand des Fleisches nicht beobachtbar ist. Die Verpackung kann jedoch definiert gelabelt sein und einen Barcode und ein Mindesthaltbarkeitsdatum aufweisen. Bei manchen Produkten besteht eine erhöhte Gesundheitsgefahr nach Ablauf des Mindesthaltbarkeitsdatums, wie beispielsweise bei Hackfleisch, Geflügelfleisch oder Fischprodukten. Bei diesen Produkten kann die Ampel angepasst werden. Zur Beurteilung, ob ein Produkt noch verwendbar ist, enthält die Produktspezifikation einen Wert, der eine verlustartspezifische Beurteilung zulässt.

| Lebensmittel | Farbe relativ absolut z.B. rot/braun | | Gewicht | Textur Größe | Form |
|---|---|---|---|---|---|
| Apfel | + | + | + | + | + |
| Salat | + | - | + | (-) | + |
| Melone | + | + | - | + | - |

Die relative Farbbeurteilung kann mit einer Differenz zum Erstbild und einem Schattierungsgrenzwert beurteilt werden. Die Reifeerkennung erfolgt anhand der Farbschattierung.

Die Applikation kann Hinweise zur Lagerung im Kältegerät 100 anzeigen, wie beispielsweise
"Dieses Lebensmittel sollte nicht im Kühlschrank aufbewahrt werden"
"Hackfleisch auf oberer Etage! Hinweis: Nach unten/in kälterer Zone lagern"
oder
"Hinweis: Kühlschrank kälter einstellen oder Automatik-Funktion einstellen, geringerer Lagerverlust überkompensiert Stromkosten."

Einige Produkte weisen ein Farbumschlagetikett (Time Temperature Integrator - TTI) auf, der eine produktspezifische Aktivierung anzeigt. Die definierten Farben des Farbumschlagetikett sind sensorisch auslesbar. Durch eine Kopplung mit einem Lagerverwaltungssystem (Storage Guide) kann eine Ernährungsempfehlung generiert werden. Beim Befüllen des Kältegerätes 100 kann eine Inventarliste alle eingelagerten Gegenstände erstellt werden, indem diese an einem Kameramodul vorbeigezogen werden.

Zudem kann die Applikation die Langzeitveränderung im Zeitraffer abspielen. Bei einem virtueller Rundgang kann von der Applikation ein auf dem Kameramodulbediengerät 300 ein Abbild des Kältegeräteinhaltes angezeigt werden. Die Funktionen können eine Kombination aus Sprache und Barcode (EAN/QR), Bilderkennung und Bilddarstellung sein. Produkte können hinzugenommen werden. Es kann eine Synchronisierung mit einem Foto erfolgen und Einkaufslisten können generiert werden.

Zusätzlich kann das Kältegerät 100 derart ausgestaltet sein, dass ein Benutzer Bilddaten von einem Mobiltelefon aus anfordern kann, so dass auch an entfernt gelegenen Orten eine möglich Frischebeobachtung möglich wird. Hierzu kann eine GSM-Kamera mit MMS-Versand verwendet werden. Die Verbindung zwischen Kamera und Mobiltelefon erfolgt mittels der GSM-Infrastruktur. Mittels einer SMS kann ein Bild angefordert werden, das daraufhin als MMS-Bild übermittelt wird.

Ein Versand von Fotos und Videos kann zudem per E-Mail oder MMS mit einem Zeit- und Datumsstempel erfolgen. Ein Foto- oder Videoversand kann auf Abruf in regelmäßigen Intervallen erfolgen. Die Fotoauflösung der MMS beträgt beispielsweise 160x120, 320x240, 640x480 Pixel. Eine Aufzeichnung erfolgt im internen Speicher, wenn kein GSM Signal vorhanden ist. Eine Stromversorgung erfolgt per Akku, Netzteil oder USB-Anschluss. Die Steuerung kann direkt am Kältegerät 100, am einem Personal Computer oder per SMS vom Mobiltelefon aus durchgeführt werden.

Mittels des Mobiltelefons kann eine bequeme Fernbedienung per Android-App ermöglicht werden. Die GSM-Kamera kann über GSM per Anruf oder SMS aktiviert werden und unterstützt SMS-Befehle. Zusätzlich kann eine Stromausfall-Meldung abgegeben werden. Der Blickwinkel der Kamera beträgt 60° oder 90° mit aufsteckbarer Magnet-Weitwinkellinse, Zudem kann eine Blitz-Funktion implementiert sein.

Daneben kann eine UMTS/HSDPA-Kamera (WCDMA/TD-SCDMA) mit einer Fotoauflösung von 1,3 Megapixel verwendet werden. Die UMTS/HSDPA-Kamera weist eine Neige- und Schwenkfunktion und eine Nachtsichtfunktion auf. Ein UMTS-Video-Server ist getrennt zur Kamera angeordnet.

Zusätzlich kann eine RJ45-10/100M Ethernet-Interface mit der ohne WLAN vorgesehen sein. Netzwerkfähige Kameramodulbediengeräte 300 sind beispielsweise ein Laptop oder ein Fernseher. Dadurch kann eine Trennung zwischen Multimedia-Komponenten und Kältetechnik erzielt werden. Eine Multimediaschnittstelle kann eine Standard-Multimediaschnittstelle sein. Daneben können Glasfasern mit einem Objektiv an einem Ende verwendet werden. Mehrere Glasfasern sind mit demselben Farbsensor auslesbar.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kältegerät
- 101: Kameramodul
- 101-1: Kameramodul
- 101-2: Kameramodul
- 102: Beleuchtungseinrichtung
- 103: Kühlgut
- 104: Mikrocontroller
- 105: Kältefach
- 107: Lochkamera
- 109: Seitenwand
- 111: Tür
- 113: Fachdecke
- 115: Sensormatte
- 117: Fachboden
- 119: Prozessoreinrichtung
- 121: Datenbus
- 123: Scharnier
- 125: Verteilerknoten
- 127: Kamerafeld
- 129: Rückseite
- 131: Vorderseite
- 133: Platine
- 135: Lochblende
- 137: nicht sichtbarer Bereich
- 139: Sichtbereich
- 141: Verzeichnung
- 143: Verzeichnung
- 145: Schnittstelle
- 147: Bilddaten
- 149: Bilddaten
- 151: Subtraktion
- 153: Bildbereich
- 155: Steuerelement
- 157: Kamera
- 161: Netzwerk
- 163: GSM-Netz
- 165: Absteller
- 167: Türholm
- 169: Türgriff

- 200: Kältegerätesystem

- 300: Anzeigegerät/Kameramodulbediengerät
- 303: berührungsempfindliche Anzeige
- 305: Menüauswahl

## Patentansprüche

1. Kältegerät (100), wobei das Kältegerät (100) ein Kameramodul (101) zum Erfassen von ersten Bilddaten eines Kühlgutes (103) zu einem ersten Zeitpunkt und zweiten Bilddaten des Kühlgutes (103) zu einem zweiten Zeitpunkt und eine Frischebestimmungseinrichtung zum Bestimmen eines Frischezustands des Kühlgutes (103) auf Basis der ersten Bilddaten und der zweiten Bilddaten umfasst, wobei die Frischebestimmungseinrichtung eine Prozessoreinrichtung (119) zum Verarbeiten der ersten und der zweiten Bilddaten umfasst, **dadurch gekennzeichnet, dass** die Frischebestimmungseinrichtung ausgebildet ist, die Art des Kühlgutes (103) auf Basis der ersten Bilddaten oder der zweiten Bilddaten zu erfassen, wobei das Kältegerät (100) ein Kältefach (105) mit einer Sensormatte (115) zum Erfassen einer Veränderung einer Belastung eines Fachbodens (117) umfasst, so dass die folienartige Sensormatte (115) zur Erkennung von Gewichtsveränderungen genutzt werden kann, wobei die Sensormatte (115) wenige Millimeter dick ist und auf dem Fachboden (117) aufgelegt ist, wobei die Prozessoreinrichtung (119) ausgebildet ist, den Frischezustand des Kühlgutes auf Basis der Daten über Gewichtsveränderungen zu bestimmen, die durch die Sensormatte (115) erfasst werden.

2. Kältegerät (100) nach Anspruch 1, **dadurch gekennzeichnet, dass** die ersten Bilddaten und die zweiten Bilddaten Dreifarb-Bilddaten sind und die Frischebestimmungseinrichtung ausgebildet ist, den Frischezustand des Kühlgutes (103) auf Basis eines Farbunterschieds zwischen den ersten Bilddaten und den zweiten Bilddaten zu bestimmen.

3. Kältegerät (100) nach einem der vorangehenden Ansprüche, **dadurch gekennzeichnet, dass** das Kältegerät (100) eine Eingabevorrichtung zum manuellen Eingeben der Art des Kühlgutes (103) umfasst.

4. Kältegerät (100) nach einem der vorangehenden Ansprüche, **dadurch gekennzeichnet, dass** die Frischebestimmungseinrichtung (107) ausgebildet ist, den Frischezustand des Kühlgutes (103) auf Basis der Art des Kühlgutes (103) zu bestimmen.

5. Kältegerät (100) nach einem der vorangehenden Ansprüche, **dadurch gekennzeichnet, dass** das Kameramodul (103) ein Lichtsensorfeld zum Erfassen der ersten oder zweiten Bilddaten umfasst.

6. Kältegerät (100) nach einem der vorangehenden Ansprüche, **dadurch gekennzeichnet, dass** das Kameramodul (103) ausgebildet ist, die ersten und die zweiten Bilddaten sowohl im sichtbaren Spektralbereich als auch im Infrarot-Spektralbereich zu bestimmen.

7. Kältegerät nach Anspruch 6, **dadurch gekennzeichnet, dass** das Kameramodul (103) ein dichroitisches Element zum gleichzeitigen Erfassen der Bilddaten im sichtbaren Spektralbereich und im Infrarot-Spektralbereich umfasst.

8. Kältegerät (100) nach einem der vorangehenden Ansprüche, **dadurch gekennzeichnet, dass** das Kältegerät (100) eine Beleuchtungseinrichtung (102) zum Beleuchten des Kältefachs (105) während des Erfassens der ersten und/oder zweiten Bilddaten umfasst.

9. Kältegerät (100) nach Anspruch 8, **dadurch gekennzeichnet, dass** die Beleuchtungseinrichtung (102) ausgebildet ist, monochromatisches Licht einer vorgegebenen Frequenz auszusenden.

10. Kältegerät (100) nach Anspruch 9, **dadurch gekennzeichnet, dass** die Beleuchtungseinrichtung (102) eine frequenzmäßig durchstimmbare Lichtquelle zum Aussenden des monochromatischen Lichtes umfasst.

11. Kältegerät (100) nach Anspruch 8, **dadurch gekennzeichnet, dass** die Beleuchtungseinrichtung (102) ausgebildet ist, polychromatisches Licht auszusenden.

12. Kältegerät (100) nach einem der vorangehenden Ansprüche **dadurch gekennzeichnet, dass** das Kältegerät (100) ein Anzeigegerät (300) zum Anzeigen des Frischzustandes des Kühlgutes (103) umfasst.

13. Kältegerät (100) nach einem der vorangehenden Ansprüche, **dadurch gekennzeichnet, dass** das Kältegerät (100) einen Sensor zum Erfassen einer Öffnung einer Tür (111) des Kältegerätes (100) umfasst und das Kältegerät (100) ausgebildet ist, eine Erfassung der ersten oder zweiten Bilddaten bei geöffneter Tür zu verhindern.

## Claims

1. Refrigeration appliance (100), wherein the refrigeration appliance (100) comprises a camera module (101) for detecting first image data of an item to be refrigerated (103) at a first time point and second image data of the item to be refrigerated (103) at a second time point and a freshness determination device for determining a state of freshness of the item to be refrigerated (103) based on the first image data and the second image data, wherein the freshness determination device comprises a processor device (119) for processing the first and second image data, **characterised in that** the freshness determination device is configured to detect the type of item to be refrigerated (103), based on the first image data or the second image data, wherein the refrigeration appliance (100) comprises a refrigeration compartment (105) with a sensor mat (115) for detecting an alteration to a loading of a shelf (117), so that the film-like sensor mat (115) may be used for identifying weight alterations, wherein the sensor mat (115) is a few millimetres thick and is positioned on the shelf (117), wherein the processor device (119) is configured to determine the state of freshness of the item to be refrigerated, based on the data relating to weight alterations which are detected by the sensor mat (115).

2. Refrigeration appliance (100) according to claim 1, **characterised in that** the first image data and the second image data are three-color image data and the freshness determination device is configured to determine the state of freshness of the item to be refrigerated (103), based on a colour difference between the first image data and the second image data.

3. Refrigeration appliance (100) according to one of the preceding claims, **characterised in that** the refrigeration appliance (100) comprises an input device for the manual input of the type of item to be refrigerated (103).

4. Refrigeration appliance (100) according to one of the preceding claims, **characterised in that** the freshness determination device (107) is configured to determine the state of freshness of the item to be refrigerated (103), based on the type of item to be refrigerated (103).

5. Refrigeration appliance (100) according to one of the preceding claims, **characterised in that** the camera module (103) comprises a light sensor array for detecting the first or second image data.

6. Refrigeration appliance (100) according to one of the preceding claims, **characterised in that** the camera module (103) is configured to determine the first and second image data, both in the visible spectral range and in the infrared spectral range.

7. Refrigeration appliance according to claim 6, **characterised in that** the camera module (103) comprises a dichroic element for simultaneously detecting the image data in the visible spectral range and in the infrared spectral range.

8. Refrigeration appliance (100) according to one of the preceding claims, **characterised in that** the refrigeration appliance (100) comprises a lighting device (102) for lighting the refrigeration compartment (105) when detecting the first and/or second image data.

9. Refrigeration appliance (100) according to claim 8, **characterised in that** the lighting device (102) is configured to transmit monochromatic light of a predetermined frequency.

10. Refrigeration appliance (100) according to claim 9, **characterised in that** the lighting device (102) comprises a light source which is able to be adjusted according to frequency, for transmitting the monochromatic light.

11. Refrigeration appliance (100) according to claim 8, **characterised in that** the lighting device (102) is configured to transmit polychromatic light.

12. Refrigeration appliance (100) according to one of the preceding claims, **characterised in that** the refrigeration appliance (100) comprises a display device (300) for displaying the state of freshness of the item to be refrigerated (103).

13. Refrigeration appliance (100) according to one of the preceding claims, **characterised in that** the refrigeration appliance (100) comprises a sensor for detecting an opening of a door (111) of the refrigeration appliance (100) and the refrigeration appliance (100) is configured to prevent a detection of the first or second image data when the door is open.

## Revendications

1. Appareil frigorifique (100), dans lequel l'appareil frigorifique (100) comprend un module à caméra (101) permettant d'acquérir des premières données d'image d'un produit réfrigéré (103) à un premier moment et des secondes données d'image du produit réfrigéré (103) à un second moment et un système de détermination de fraîcheur permettant de déterminer un état de fraîcheur du produit réfrigéré (103) sur la base des premières données d'image et des secondes données d'image, dans lequel le système de détermination de fraîcheur comprend un système à processeur (119) permettant de traiter les premières et secondes données d'image,
**caractérisé en ce que** le système de détermination de fraîcheur est réalisé pour acquérir le type du produit réfrigéré (103) sur la base des premières données d'image ou des secondes données d'image, dans lequel l'appareil frigorifique (100) comprend un compartiment frigorifique (105) comportant un tapis détecteur (115) permettant d'acquérir un changement d'une charge d'une étagère (117), de sorte que le tapis détecteur de type feuille (115) peut être utilisé afin de reconnaître des changements de poids, dans lequel le tapis détecteur (115) a une épaisseur de quelques millimètres et est posé sur l'étagère (117), dans lequel le système à processeur (119) est réalisé pour déterminer l'état de fraîcheur du produit réfrigéré sur la base des données via les changements de poids qui sont acquis par le biais du tapis détecteur (115).

2. Appareil frigorifique (100) selon la revendication 1, **caractérisé en ce que** les premières données d'image et les secondes données d'image sont des données d'image en trois couleurs et le système de détermination de fraîcheur est réalisé pour déterminer l'état de fraîcheur du produit réfrigéré (103) sur la base d'une différence de couleur entre les premières données d'image et les secondes données d'image.

3. Appareil frigorifique (100) selon l'une des revendications précédentes, **caractérisé en ce que** l'appareil frigorifique (100) comprend un dispositif d'entrée permettant d'entrer manuellement le type du produit réfrigéré (103).

4. Appareil frigorifique (100) selon l'une des revendications précédentes, **caractérisé en ce que** le système de détermination de fraîcheur (107) est réalisé pour déterminer l'état de fraîcheur du produit réfrigéré (103) sur la base du type du produit réfrigéré (103).

5. Appareil frigorifique (100) selon l'une des revendications précédentes, **caractérisé en ce que** le module à caméra (103) comprend un champ de détection de lumière permettant d'acquérir les premières ou secondes données d'image.

6. Appareil frigorifique (100) selon l'une des revendications précédentes, **caractérisé en ce que** le module à caméra (103) est réalisé pour déterminer les premières et les secondes données d'image aussi bien dans le domaine spectral visible que dans le domaine spectral infrarouge.

7. Appareil frigorifique selon la revendication 6, **caractérisé en ce que** le module à caméra (103) comprend un élément dichroïque permettant d'acquérir simultanément les données d'image dans le domaine spectral visible et dans le domaine spectral infrarouge.

8. Appareil frigorifique (100) selon l'une des revendications précédentes, **caractérisé en ce que** l'appareil frigorifique (100) comprend un système d'éclairage (102) permettant d'éclairer le compartiment frigorifique (105) pendant l'acquisition des premières et/ou des secondes données d'image.

9. Appareil frigorifique (100) selon la revendication 8, **caractérisé en ce que** le système d'éclairage (102) est réalisé pour émettre une lumière monochrome d'une fréquence prédéfinie.

10. Appareil frigorifique (100) selon la revendication 9, **caractérisé en ce que** le système d'éclairage (102) comprend une source de lumière accordable au niveau de la fréquence permettant d'émettre la lumière monochrome.

11. Appareil frigorifique (100) selon la revendication 8, **caractérisé en ce que** le système d'éclairage (102) est réalisé pour émettre une lumière polychrome.

12. Appareil frigorifique (100) selon l'une des revendications précédentes, **caractérisé en ce que** l'appareil frigorifique (100) comprend un appareil d'affichage (300) permettant d'afficher l'état de fraîcheur du produit réfrigéré (103).

13. Appareil frigorifique (100) selon l'une des revendications précédentes, **caractérisé en ce que** l'appareil frigorifique (100) comprend un détecteur permettant d'acquérir une ouverture d'une porte (111) de l'appareil frigorifique (100) et l'appareil frigorifique (100) est réalisé pour empêcher une acquisition des premières ou secondes données d'image lorsque la porte est ouverte.
